# EUROPEAN PATENT APPLICATION

(11) **EP 4 242 810 A1**
(43) Date of publication of application: **13.09.2023**
(21) Application number: 21905590.2
(22) Date of filing: 08.12.2021
(51) Int. Cl.: G06F 3/0481

(54) **APPLICATION SHARING METHOD, AND ELECTRONIC DEVICE AND STORAGE MEDIUM**

(30) Priority: 18.12.2020 CN 202011502015
(71) Applicant: Huawei Technologies Co., Ltd., Shenzhen, Guangdong 518129 (CN)
(72) Inventor: ZHOU, Liang, Shenzhen, Guangdong 518129 (CN); WANG, Yongde, Shenzhen, Guangdong 518129 (CN); TU, Linlin, Shenzhen, Guangdong 518129 (CN)
(74) Representative: MERH-IP Matias Erny Reichl Hoffmann Patentanwälte PartG mbB
(86) International application number: PCT/CN2021/136337
(87) International publication number: WO 2022/127661

(57) **Abstract**

An application sharing method, an electronic device, and a storage medium are provided, and relate to the field of communication technologies. In the method, a first device and a second device are in a multi-screen collaboration state, a second application is installed on the second device, and the second application is not installed on the first device. When a user browses an interface of a first application in the first device, if the user expects to perform an operation like sharing on the interface of the current first application, the user may invoke the second application in the second device on the display interface of the first device to complete the sharing. Therefore, a cross-application-based data sharing manner is provided between a plurality of devices, so that user experience can be improved.

## Description

This application claims priority to Chinese Patent Application No. 202011502015.X, filed with the China National Intellectual Property Administration on December 18, 2020 and entitled "APPLICATION SHARING METHOD, ELECTRONIC DEVICE, AND STORAGE MEDIUM", which is incorporated herein by reference in its entirety.

### TECHNICAL FIELD

Embodiments of this application relate to the field of communication technologies, and in particular, to an application sharing method, an electronic device, and a storage medium.

### BACKGROUND

With development of information technologies, a network has become an important means of information dissemination. In addition, as electronic devices become diversified, there are increasing interactions between electronic devices. In particular, multi-screen collaboration between electronic devices is performed. For example, displayed content of one electronic device may be displayed on a screen of another electronic device, or a file of one electronic device may be transmitted to another electronic device.

### SUMMARY

Embodiments of this application provide an application sharing method and an electronic device, and this application further provides a computer-readable storage medium, to provide an efficient application sharing manner and implement cross-device application sharing.

According to a first aspect, an embodiment of this application provides an application sharing method, applied to a first electronic device. A first application is installed on the first electronic device, and the method includes:

A first interface of the first application is displayed. The first interface includes a first option. Specifically, the first electronic device may be a display device with a relatively large screen, for example, a tablet. A specific form of the first electronic device is not limited in this application. The first application may be an application with browsing content, for example, a web page. A specific type of the first application is not limited in this application. The first option may be an option for performing an operation on the first application, for example, sharing. A specific form of the first option is not limited in this application.

A first operation performed by a user on the first option is received. Specifically, the first operation may be tapping, double-tapping, or sliding. A specific form of the first operation is not limited in this application.

A first menu is displayed in response to the first operation. The first menu includes an icon of a second application, and the second application is an application installed on a second electronic device. Specifically, the second electronic device may be a display device with a relatively small screen, for example, a mobile phone. There may be one or more second applications. The second application may correspond to a task type of the first option. For example, if the first option is of a sharing type, the second application may be social software used for sharing, for example, Weibo or WeChat. A specific form of the second application is not limited in this application.

A second operation performed by the user on the icon of the second application is received. Specifically, the second operation may be tapping, double-tapping, or sliding. A specific form of the second operation is not limited in this application.

The second application is determined in response to the second operation, and an application sharing request is sent to the second electronic device. The application sharing request is used to indicate the second electronic device to enable the second application.

In this embodiment, an application on a multi-screen collaboration device is shared, so that cross-device application sharing can be implemented, thereby improving user experience.

In a possible implementation, before the first operation performed by the user on the first option is received, the method further includes:
A multi-screen collaboration connection to the second electronic device is established.

In this embodiment, the multi-screen collaboration connection is established between the first electronic device and the second electronic device, so that multi-screen collaboration between the two devices can be implemented, thereby implementing application sharing between the devices.

In a possible implementation, the method further includes:
A second interface is displayed. The second interface includes a window of the second electronic device.

In this embodiment, the window of the second electronic device is displayed in the first electronic device, so that displayed content in the second electronic device can be remotely viewed, thereby improving viewing experience of the user.

In a possible implementation, the second interface includes a second option, and after the second interface is displayed, the method further includes:
A third operation performed by the user on the second option is received. Specifically, the second option may be a control corresponding to the second interface, for example, a minimize control. The third operation may be tapping, double-tapping, or sliding. A specific form of the second operation is not limited in this application.

The window of the second electronic device is minimized in response to the third operation.

In this embodiment, the window of the second electronic device is minimized, so that a function of hiding the window of the second electronic device can be implemented, thereby improving viewing experience of the user.

In a possible implementation, the method further includes:
An interface of the second application is displayed in the window of the second electronic device. Specifically, after the second electronic device enables the determined second application, the interface of the second application may be further displayed, so that the interface of the second application is displayed in the window of the second electronic device through multi-screen collaboration.

In this embodiment, the interface of the second application is displayed in the window of the second electronic device, so that content in the second electronic device can be viewed in the first electronic device, thereby improving viewing experience of the user.

In a possible implementation, the method further includes:
A third application is installed on the first electronic device, and the first menu further includes an icon of the third application. Specifically, the third application may be an application that is locally installed on the first electronic device and that corresponds to the task type of the first option.

In this embodiment, the icon of the third application is displayed in the first menu, so that the user can select the third application. In this way, content of the current first application can be processed by using the local application, and the user can perform selection more freely, so that user experience is improved.

In a possible implementation, the method further includes:
The first menu further includes a first identifier, and the first identifier is used to indicate that the second application is an application installed on the second electronic device. Specifically, the first identifier may be a mark, for example, a name of the second electronic device, that identifies a source of the user. A specific form of the first identifier is not limited in this application.

In this embodiment, the source of the second application is marked, so that the user can learn of the source of the second application, thereby improving user operation flexibility.

In a possible implementation, the method further includes:
The second application in the first menu is determined by the task type corresponding to the first option. Specifically, the task type may be a processing type of content in the current first application, for example, sharing or forwarding. A specific form of the task type is not limited in this application.

In this embodiment, the second application is determined by using the task type, so that efficiency of retrieving the second application can be improved.

In a possible implementation, before the first operation performed by the user on the first option is received, the method further includes:
First application information sent by the second electronic device is received. The first application information includes package information of the second application. Specifically, the package information may be information related to a package, for example, information such as an icon or a package name. It may be understood that the package information does not include the package.

In this embodiment, the second electronic device actively sends the first application information to the first electronic device, so that the first electronic device can obtain the second application in the second electronic device, thereby improving efficiency of retrieving the second application.

In a possible implementation, after the first application information sent by the second electronic device is received, the method further includes:
Simulation is performed based on the first application information sent by the second electronic device, to obtain the second application.

In this embodiment, the first electronic device directly performs simulation after receiving the application information sent by the second electronic device, so that efficiency of retrieving the second application can be improved.

In a possible implementation, after the first application information sent by the second electronic device is received, the method further includes:
A query is performed on the first application information based on the task type corresponding to the first option, to obtain second application information that matches the task type. Simulation is performed based on the second application information to obtain the second application.

In this embodiment, the first electronic device performs simulation only on the second application information that matches the task type, to obtain the second application, so that redundant second applications can be reduced, and memory occupation of the first electronic device can be reduced, thereby improving system efficiency of the first electronic device.

In a possible implementation, after a response is made to the first operation, the method further includes:
A query request is sent to the second electronic device based on the task type corresponding to the first option. The query request is used to obtain application information of the second application installed on the second electronic device.

In this embodiment, the first electronic device actively requests the application information from the second electronic device, to avoid receiving redundant application information, thereby reducing memory occupation of the first electronic device and improving system efficiency of the first electronic device.

According to a second aspect, an embodiment of this application provides an application sharing apparatus, including:
a first display module, configured to display a first interface of a first application, where the first interface includes a first option;
a first receiving module, configured to receive a first operation performed by a user on the first option;
a second display module, configured to display a first menu in response to the first operation, where the first menu includes an icon of a second application, and the second application is an application installed on a second electronic device;
a second receiving module, configured to receive a second operation performed by the user on the icon of the second application; and
a sharing module, configured to: determine the second application in response to the second operation, and send an application sharing request to the second electronic device, where the application sharing request is used to indicate the second electronic device to enable the second application.

In a possible implementation, the apparatus further includes:
a connection module, configured to establish a multi-screen collaboration connection to the second electronic device.

In a possible implementation, the apparatus further includes:
a third display module, configured to display a second interface. The second interface includes a window of the second electronic device.

In a possible implementation, the second interface includes a second option, and the apparatus further includes:
a minimization module, configured to: receive a third operation performed by the user on the second option; and minimize, by the first electronic device, the window of the second electronic device in response to the third operation.

In a possible implementation, an interface of the second application is displayed in the window of the second electronic device.

In a possible implementation, a third application is installed on the first electronic device, and the first menu further includes an icon of the third application.

In a possible implementation, the first menu further includes a first identifier, and the first identifier is used to indicate that the second application is an application installed on the second electronic device.

In a possible implementation, the second application in the first menu is determined by a task type corresponding to the first option.

In a possible implementation, the apparatus further includes:
a third receiving module, configured to receive first application information sent by the second electronic device. The first application information includes package information of the second application.

In a possible implementation, the apparatus further includes:
a first simulation module, configured to perform simulation based on the first application information sent by the second electronic device, to obtain the second application.

In a possible implementation, the apparatus further includes:
a second simulation module, configured to: perform a query in the first application information based on the task type corresponding to the first option, to obtain second application information that matches the task type; and perform simulation based on the second application information to obtain the second application.

In a possible implementation, the apparatus further includes:
a query module, configured to send a query request to the second electronic device based on the task type corresponding to the first option. The query request is used to obtain application information of the second application installed on the second electronic device.

According to a third aspect, an embodiment of this application provides a first electronic device, including:
a display, a processor, a memory, a plurality of applications, and a computer program, where the computer program is stored in the memory, the computer program includes instructions, and when the instructions are executed by the first electronic device, the first electronic device is enabled to perform the following steps:
displaying a first interface of a first application, where the first interface includes a first option;
receiving a first operation performed by a user on the first option;
displaying a first menu in response to the first operation, where the first menu includes an icon of a second application, and the second application is an application installed on a second electronic device;
receiving a second operation performed by the user on the icon of the second application; and
determining the second application in response to the second operation, and sending an application sharing request to the second electronic device, where the application sharing request is used to indicate the second electronic device to enable the second application.

In a possible implementation, when the instructions are executed by the first electronic device, the first electronic device is further enabled to perform the following step before performing the step of receiving the first operation performed by the user on the first option:
establishing a multi-screen collaboration connection to the second electronic device.

In a possible implementation, when the instructions are executed by the first electronic device, the first electronic device is further enabled to perform the following step:
displaying a second interface. The second interface includes a window of the second electronic device.

In a possible implementation, the second interface includes a second option, and when the instructions are executed by the first electronic device, the first electronic device is further enabled to perform the following steps after performing the step of displaying the second interface:
receiving a third operation performed by the user on the second option; and
minimizing the window of the second electronic device in response to the third operation.

In a possible implementation, an interface of the second application is displayed in the window of the second electronic device.

In a possible implementation, a third application is installed on the first electronic device, and the first menu further includes an icon of the third application.

In a possible implementation, the first menu further includes a first identifier, and the first identifier is used to indicate that the second application is an application installed on the second electronic device.

In a possible implementation, the second application in the first menu is determined by a task type corresponding to the first option.

In a possible implementation, when the instructions are executed by the first electronic device, the first electronic device is further enabled to perform the following step before performing the step of receiving the first operation performed by the user on the first option:
receiving first application information sent by the second electronic device. The first application information includes package information of the second application.

In a possible implementation, when the instructions are executed by the first electronic device, the first electronic device is further enabled to perform the following step after performing the step of receiving the first application information sent by the second electronic device:
performing simulation based on the first application information sent by the second electronic device, to obtain the second application.

In a possible implementation, when the instructions are executed by the first electronic device, the first electronic device is further enabled to perform the following steps after performing the step of receiving the first application information sent by the second electronic device:
performing a query in the first application information based on the task type corresponding to the first option, to obtain second application information that matches the task type; and
performing simulation based on the second application information to obtain the second application.

In a possible implementation, when the instructions are executed by the first electronic device, the first electronic device is further enabled to perform the following step after performing the step of responding to the first operation:
sending a query request to the second electronic device based on the task type corresponding to the first option. The query request is used to obtain application information of the second application installed on the second electronic device.

It should be understood that technical solutions of the second aspect and the third aspect of this application are consistent with the technical solutions of the first aspect. Beneficial effects achieved in the various aspects and corresponding feasible implementations are similar, and details are not described again.

According to a fourth aspect, this application provides a computer-readable storage medium. The computer-readable storage medium stores a computer program, and when the computer program runs on a computer, the computer is enabled to perform the method according to the first aspect.

According to a fifth aspect, this application provides a computer program. When the computer program is executed by a computer, the computer program is used to perform the method according to the first aspect.

In a possible design, a part or all of the program in the fifth aspect may be stored in a storage medium that is packaged with a processor, or a part or all of the program may be stored in a memory that is not packaged with a processor.

### BRIEF DESCRIPTION OF DRAWINGS

FIG. 1 is a diagram of an architecture of an application scenario according to an embodiment of this application;
FIG. 2 is a schematic diagram of a structure of an embodiment of an electronic device according to this application;
FIG. 3 is a schematic diagram of a software architecture according to an embodiment of this application;
FIG. 4A to FIG. 4C are schematic diagrams of a user interface according to an embodiment of this application;
FIG. 5A to FIG. 5C are schematic diagrams of a multi-screen collaboration connection interface according to an embodiment of this application;
FIG. 6A and FIG. 6B are schematic diagrams of a multi-screen collaboration window according to an embodiment of this application;
FIG. 7 is a schematic diagram of multi-screen collaboration window minimization according to an embodiment of this application;
FIG. 8 is a flowchart of an application sharing method according to an embodiment of this application;
FIG. 9 and FIG. 9A are schematic diagrams of interface operations of an application according to an embodiment of this application;
FIG. 10 and FIG. 11 are schematic diagrams of a menu display interface according to an embodiment of this application;
FIG. 12 is a schematic diagram of multi-screen collaboration display according to an embodiment of this application;
FIG. 13 to FIG. 15 are schematic diagrams of operations of a file opening scenario according to an embodiment of this application; and
FIG. 16 is a schematic diagram of a structure of an application sharing apparatus according to an embodiment of this application.

### DESCRIPTION OF EMBODIMENTS

Terms used in the implementations of this application are only used to explain specific embodiments of this application, and are not intended to limit this application.

The following describes the technical solutions in embodiments of this application with reference to the accompanying drawings in embodiments of this application. In descriptions of this application, unless otherwise specified, "/" represents "or". For example, A/B may represent A or B. In this specification, "and/or" describes only an association relationship between associated objects, and represents that three relationships may exist. For example, A and/or B may represent the following three cases: Only A exists, both A and B exist, and only B exists.

In the following descriptions, terms "first" and "second" are used only for description purposes, and cannot be understood as an indication or implication of relative importance or an implicit indication of a quantity of indicated technical features. Therefore, features limited by "first" and "second" may explicitly or implicitly include one or more such features. In the descriptions of embodiments of this application, unless otherwise specified, "a plurality of" means two or more.

With continuous development of a function of multi-screen collaboration between electronic devices, multi-screen collaboration-based applications become increasingly diversified. In the conventional technology, screen sharing between electronic devices can be implemented on the basis of multi-screen collaboration. For example, screen information of one electronic device can be shared on a screen of another electronic device. Data sharing between electronic devices can also be implemented. For example, a file of one electronic device can be dragged to another electronic device. However, in the conventional technology, only visible data is shared between devices, for example, a file is shared. In the conventional technology, a cross-application operation cannot be implemented between devices. For example, when one electronic device enables an application of the electronic device, application sharing cannot be implemented by invoking an application of another electronic device. For example, during multi-screen collaboration, after a connection is established between a tablet personal computer (shortened to tablet) and a mobile phone, a window of the mobile phone is displayed on the tablet personal computer through screen mirroring. A user can perform operations on an application and a file of the mobile phone in the window of the mobile phone that is displayed on the tablet, view some notification messages (for example, WeChat and short message service messages) of the mobile phone in a notification bar of the tablet, and answer and terminate calls of the mobile phone in a small window on the top of the tablet. The user can further perform an operation in a mobile phone collaboration window on the tablet, to make a call by using a mobile phone number or view a file on the mobile phone, thereby performing operations on an application and a file of the mobile phone on the tablet. However, in the conventional technology, when a cross-application operation is implemented between devices, the operation may be inconvenient. When the user opens an application on the tablet, an application installed on the mobile phone cannot be directly invoked in the application to perform cross-device and cross-application sharing. For example, when browsing a web page on the tablet, the user cannot share a link to the web page by using social software in the mobile phone.

Therefore, embodiments of this application provide an application sharing method, to implement cross-device application sharing, thereby improving user experience.

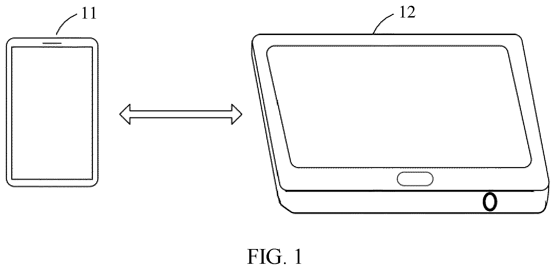

For a better understanding of an application sharing method, an electronic device, and a storage medium provided in embodiments of this application, the following first describes an architecture of an interaction system to which the application sharing method provided in embodiments of this application is applicable. FIG. 1 is a schematic diagram of an interaction system according to an embodiment of this application. As shown in FIG. 1, the system may include one or more first devices 11 (only one of the first devices is shown as an example in FIG. 1) and one or more second devices 12 (only one of the second devices is shown as an example in FIG. 1).

One or more applications (application, APP) may be installed on and run on the first device 11. The one or more applications may be, for example, a map application, a shopping application, and an email application, or may be an application (the application is referred to as a "collaboration assistant" in the following embodiments of this application) configured to map displayed content of the first device 11 to the second device. The application may also be referred to as an application.

The first device 11 may include but is not limited to any handheld electronic product based on an intelligent operating system, and may perform human-computer interaction with a user by using an input device like a keyboard, a virtual keyboard, a touchpad, a touchscreen, or a voice-activated device. For example, the first device 11 is a smartphone, a tablet personal computer, a handheld computer, or a wearable electronic device. The intelligent operating system includes but is not limited to any operating system, for example, Android, iOS, Windows, or MAC, that enriches device functions by providing various applications to the device.

The second device 12 may include but is not limited to a tablet personal computer, a personal computer, a desktop computer, a television, a vehicle-mounted display, a projector display, and the like. In this embodiment, the second device 12 may provide a display service for the first device 11. Corresponding programs need to run on the second device 12 to provide the display service. For example, the programs may be an application (which may be referred to as a "collaboration assistant" below) that receives information sent by the first device 11 and stores the information and an application (which may be referred to as a "window manager" below) displayed on a display of the second device 12 based on the information sent by the first device 11.

The second device 12 may establish a connection to the first device 11 by using a data cable, Bluetooth, a wireless fidelity (Wireless Fidelity, Wi-Fi) network, or the like, to perform data exchange. For example, the first device 11 and the second device 12 may implement a communication connection by using a Wi-Fi p2p technology. When the two devices are connected to a same network, the first device 11 can discover the second device 12, and then receive an operation instruction of a user to implement a communication connection to the second device 12. Alternatively, when the two devices access a same network at the same time, the first device 11 can discover the second device 12, and automatically establish a communication connection to the second device 12. The following describes in detail a process of establishing a communication connection between the two devices, and details are not described herein.

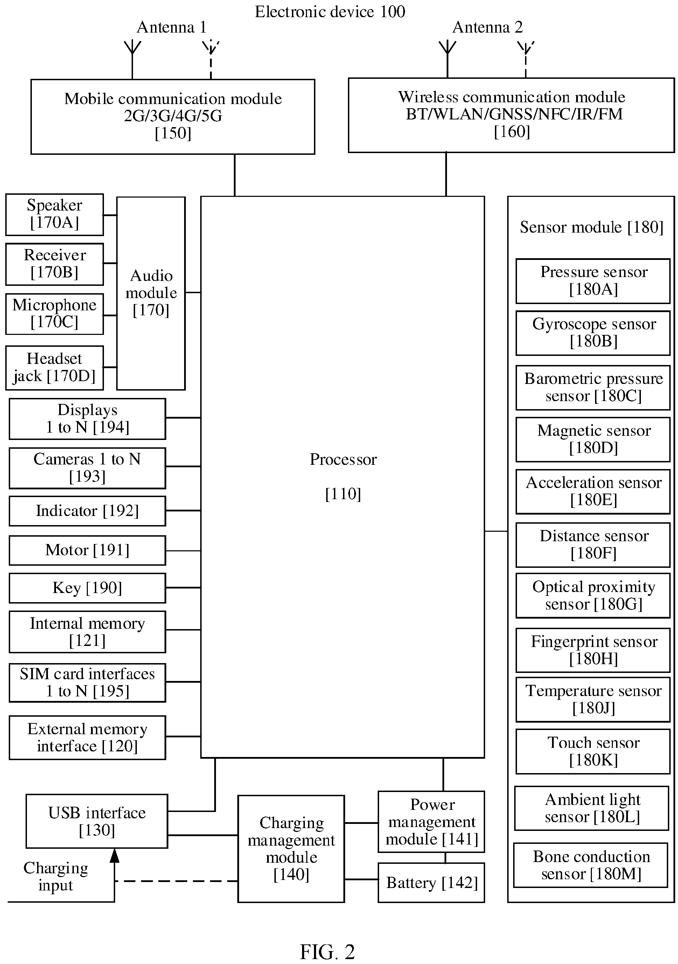

The following first describes an example electronic device provided in the following embodiments of this application with reference to FIG. 2. FIG. 2 is a schematic diagram of a structure of an electronic device 100. The electronic device 100 may be the first device 11 or the second device 12 shown in FIG. 1.

The electronic device 100 may include a processor 110, an external memory interface 120, an internal memory 121, a universal serial bus (universal serial bus, USB) interface 130, a charging management module 150, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The illustrated components may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 200. The controller may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory, to avoid repeated access and reduce waiting time of the processor 110. This improves system efficiency.

Execution of the application sharing method provided in embodiments of this application may be controlled by the processor 110 or completed by invoking another component, for example, invoking a processing program in embodiments of this application that is stored in the internal memory 121, or invoking, by using the external memory interface 120, a processing program in embodiments of this application that is stored in a third-party device, to control the wireless communication module 160 to perform data communication with another electronic device, thereby implementing application sharing between a plurality of electronic devices and improving user experience.

In some embodiments, the processor 110 may include one or more interfaces. The interface may include an inter-integrated circuit (inter-integrated circuit, 12C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering calls by using a Bluetooth headset.

The PCM interface may also be used to perform audio communication, and sample, quantize, and encode an analog signal. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering calls by using a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music by using a Bluetooth headset.

The MIPI interface may be configured to connect the processor 110 to peripheral components such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface compliant with a USB standard specification, and may be specifically a mini USB interface, a micro USB interface, a USB type-C interface, or the like. The USB interface 130 may be configured to connect to the charger to charge the electronic device 100, or may be configured to transmit data between the electronic device 100 and a peripheral device. The USB interface 130 may alternatively be configured to connect to a headset and play audio through the headset. The interface may alternatively be configured to connect to another electronic device like an AR device.

It may be understood that an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, switch, power amplifier, low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then the demodulator transmits the demodulated low-frequency baseband signal to the baseband processor for processing. The low-frequency baseband signal is processed by the baseband processor and then transferred to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function by using the GPU, the display 194, the application processor, and the like. The GPU is a microprocessor for image processing, and is connected to the display 194 and the application processor. The GPU is configured to perform mathematical and geometric calculations for graphics rendering. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 100 may include 1 or N displays 194, where N is a positive integer greater than 1.

In this embodiment of this application, the electronic device 100 may display a user interface by using the display 194.

The electronic device 100 may implement a photographing function by using the ISP, the camera 193, the video codec, the GPU, the display 194, the application processor, and the like.

The ISP is configured to process data fed back by the camera 193. For example, during photographing, a shutter is open, and light is transmitted to a photosensitive element of the camera through a lens. An optical signal is converted into an electrical signal. The photosensitive element of the camera transfers the electrical signal to the ISP for processing, so that the ISP converts the electrical signal into an image visible to a naked eye. The ISP may further perform algorithm optimization on noise, brightness, and complexion of an image. The ISP may further optimize parameters such as exposure and a color temperature of a photographing scene. In some embodiments, the ISP may be disposed in the camera 193.

The camera 193 is configured to capture a still image or a video. An optical image of an object is generated by the lens and projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, so that the ISP converts the electrical signal into a digital image signal. The ISP outputs the digital image signal to the DSP for processing. The DSP converts the digital image signal into an image signal in a standard form, for example, RGB or YUV. In some embodiments, the electronic device 100 may include 1 or N cameras 193, where N is a positive integer greater than 1.

The digital signal processor is configured to process digital signals, including not only digital image signals but also other digital signals. For example, when the electronic device 100 selects a frequency, the digital signal processor is configured to perform Fourier transform or the like on energy of the frequency.

The video codec is configured to compress or decompress a digital video. The electronic device 100 can support one or more types of video codecs. In this way, the electronic device 100 can play or record videos in a plurality of encoding formats, for example, moving picture experts group (moving picture experts group, MPEG) 1, MPEG 2, MPEG 3, and MPEG 4.

The NPU is a neural-network (neural-network, NN) computing processor that quickly processes input information by referring to a structure of a biological neural network, for example, by referring to a mode of transmission between human brain neurons, and may further continuously perform self-learning. The NPU can implement applications such as intelligent cognition of the electronic device 100, for example, image recognition, face recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external memory card.

The internal memory 121 may be configured to store computer-executable program code. The executable program code includes instructions. The internal memory 121 may include a program storage region and a data storage region. The program storage region may store an operating system, an application required by at least one function (like a sound playing function or an image playing function), and the like. The data storage region may store data (such as audio data and an address book) created during use of the electronic device 100, and the like. In addition, the internal memory 121 may include a high-speed random access memory, and may further include a non-volatile memory, for example, at least one magnetic disk storage component, a flash memory device, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, by using the audio module 170, the speaker 170A, the receiver 170B, the microphone 170C, the headset jack 170D, and the application processor.

The touch sensor 180K is also referred to as a "touch panel". The touch sensor 180K may be disposed on the display 194. The touch sensor 180K and the display 194 constitute a touchscreen. The touch sensor 180K is configured to detect a touch operation performed on or near the touch sensor 180K. The touch sensor may transfer the detected touch operation to the application processor to determine a type of a touch event. Visual output related to the touch operation may be provided by using the display 194. In some other embodiments, the touch sensor 180K may alternatively be disposed on a surface of the electronic device 100, and is located at a location different from that of the display 194.

In this embodiment of this application, the electronic device 100 may receive an operation, for example, an operation like tapping, double-tapping, or sliding, of a user by using the touch sensor 180K.

The key 190 includes a power key, a volume key, and the like. The key 190 may be a mechanical key, or may be a touch key. The electronic device 100 may receive key input, and generate key signal input related to a user setting and function control of the electronic device 100.

The motor 191 may generate a vibration prompt. The motor 191 may be configured to provide an incoming call vibration prompt and a touch vibration feedback. For example, touch operations performed on different applications (such as photographing and audio playing) may correspond to different vibration feedback effects. The motor 191 may also correspond to different vibration feedback effects for touch operations performed on different regions of the display 194. Different application scenarios (for example, a time reminder, information receiving, an alarm clock, and a game) may also correspond to different vibration feedback effects. The touch vibration feedback effect can also be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with and separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195. The plurality of cards may be of a same type or different types. The SIM card interface 195 may also be compatible with different types of SIM cards. The SIM card interface 195 may also be compatible with the external memory card. The electronic device 100 interacts with a network through the SIM card, to implement functions such as calling and data communication. In some embodiments, the electronic device 100 uses an eSIM, that is, an embedded SIM card. The eSIM card may be embedded in the electronic device 100, and cannot be separated from the electronic device 100.

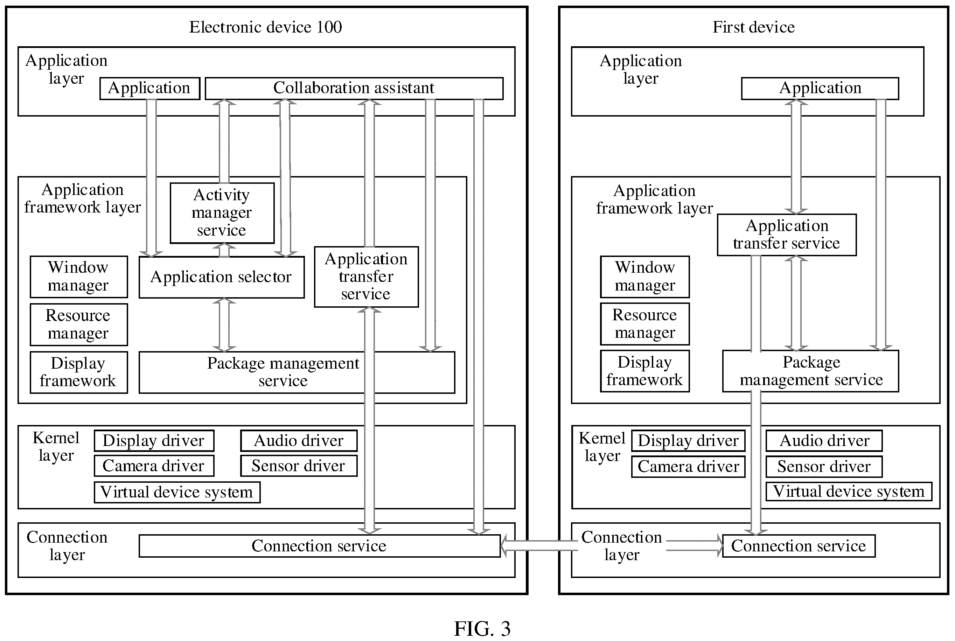

Based on the schematic diagram, shown in FIG. 2, of the hardware structure of the electronic device 100 in embodiments of this application, the following describes a block diagram of software structures of the electronic device 100 and the first device in embodiments of this application, as shown in FIG. 3.

A software system of the electronic device 100 may use a layered architecture, an event-driven architecture, a microkernel architecture, a micro service architecture, or a cloud architecture. In this embodiment of this application, an Android system of the layered architecture is used as an example to illustrate the software structures of the electronic device 100 and the first device.

In the layered architecture, software is divided into several layers, and each layer has a clear role and task. The layers communicate with each other through a software interface. In some embodiments, the Android system is divided into four layers from top to bottom: an application layer, an application framework layer, a kernel layer, and a connection layer.

The application layer may include a series of application packages.

The application package may include applications such as Camera, Gallery, Calendar, Call, Maps, Navigation, WLAN, Bluetooth, Music, Messaging, and a collaboration assistant.

The application framework layer provides an application programming interface (application programming interface, API) and a programming framework for an application at the application layer. The application framework layer includes some predefined functions.

The application framework layer may include an activity manager service, an application transfer service, a package management service, an application selector, a window manager, a resource manager, a display framework, and the like.

The activity manager service is configured to notify the collaboration assistant of an event of enabling a simulated application, so that the collaboration assistant enables the corresponding simulated application.

The application transfer service is configured to notify the "collaboration assistant" at the application layer of each event of establishing a connection between the electronic device 100 and the first device (for example, the first device 11 shown in FIG. 1), and may be further configured to assist, in response to instructions of the "collaboration assistant" at the application layer, the "collaboration assistant" in obtaining data information. For example, the data information obtained by the application transfer service includes package information of an application installed on the first device. For example, the application transfer service may implement a "Onehop" (Onehop) service and a multicast source discovery protocol (multicast source discovery protocol, MSDP) service, in other words, the electronic device 100 may establish a communication connection to the first device based on the Onehop service and the MSDP service.

The package management service is configured to manage installation and uninstallation of the application package, and parse and query configuration information of the package.

The application selector is configured to query an available application and invoke an application selected by the user.

The window manager is configured to manage a window program. The window manager may obtain a size of the display, determine whether there is a status bar, perform screen locking, take a screenshot, and the like.

The resource manager provides various resources such as a localized character string, an icon, an image, a layout file, and a video file for an application.

The display framework is configured to obtain display data of an interface or a window that is of an application and that is being displayed in the electronic device 100, and send the display data of the interface or the window to the "collaboration assistant" by using the application transfer service, may also be configured to obtain, by using the application transfer service, display data that is received by the "collaboration assistant" and that is from the first device (for example, the first device 11 shown in FIG. 1), and the like.

The kernel layer is a layer between hardware and software. The kernel layer includes at least a display driver, a camera driver, an audio driver, a sensor driver, and a virtual device system.

The virtual device system is configured to virtualize, in the electronic device 100, a component in the first device. For example, the electronic device 100 may virtualize a touchscreen of the first device by using the virtual device system, in other words, the screen of the electronic device 100 may be used as a second screen of the first device (for example, the second screen may correspond to a collaboration window), and a screen of the first device may be used as a first screen. Therefore, when the user performs an operation on the second screen of the electronic device 100, the first device can receive a corresponding operation. In other words, when the user performs an operation on the second screen, it may be considered that the user performs an operation on the first screen. Therefore, a collaboration operation between the electronic device 100 and the first device can be implemented.

With reference to a scenario in which the first device (for example, the first device 11 shown in FIG. 1) transmits data to the electronic device 100, the following describes working procedures of software and hardware of the electronic device 100 by using examples. It should be noted that a desktop of the electronic device 100 may be one or more user interfaces displayed in a home screen region after the electronic device is started and a system of the electronic device is successfully logged in. The user interfaces may include icons and names of applications installed on the electronic device.

After the user installs any application on the first device, package information of the application may be stored in a package management service. The package information may include information such as an application icon and an application capability. The application capability is used to identify content in which format can be received by the application or a file in which format can be opened by the application. It may be understood that the package information does not include a package.

An application transfer service may obtain the package information in the package management service, invoke a connection service at a connection layer, and send the package information to the electronic device 100 by using the connection service.

After receiving, by using a connection service, the package information sent by the first device, the electronic device 100 sends the package information to the application transfer service. Then the electronic device 100 sends the package information to the collaboration assistant by using the application transfer service.

After receiving the package information, the collaboration assistant in the electronic device 100 simulates the package, and stores the package information in the package management service.

The user may perform a touch operation on the display 194 of the electronic device 100. When the touch sensor 180K in the electronic device 100 receives the touch operation of the user, a corresponding hardware interrupt is sent to the kernel layer. The kernel layer processes the touch operation into an original input event (including information such as touch coordinates and a timestamp of the touch operation). The original input event is stored in the kernel layer. The application framework layer obtains the original input event from the kernel layer, and identifies a control corresponding to the input event.

For example, the touch operation is a touch tap operation, and a control corresponding to the tap operation is a control of a "browser" application. The "browser" application invokes an application transfer service interface of the application framework layer, enables the "browser" application, and obtains a user interface (user interface, UI) of the "browser" application.

The user may further perform a touch operation on the user interface of the "browser" application. For example, the user may tap a control corresponding to a "share" function key, to share a current page of the "browser" application. The touch sensor 180K in the electronic device 100 receives the touch operation of the user, and a corresponding hardware interrupt is sent to the kernel layer. The kernel layer processes the touch operation into an original input event. The application selector in the application framework layer obtains the original input event from the kernel layer, and identifies a control corresponding to the input event. Then the application selector queries available applications in the package management service based on a current control (for example, the "share" control). The available application may be an application for sharing the page of the "browser" application. The available applications include an application (for example, a Weibo application) installed on the electronic device 100, and also include an application (for example, a WeChat application) installed on the first device. After receiving a query request from the application selector, the package management service returns names of one or more available applications to the application selector based on the stored package information.

Then the user may further perform a touch operation on the user interface of the "browser" application, to complete an operation of selecting an application from the one or more available applications. For example, the user may tap a control corresponding to a "WeChat" icon, to invoke the "WeChat" application. The touch sensor 180K in the electronic device 100 receives the touch operation of the user, and a corresponding hardware interrupt is sent to the kernel layer. The kernel layer processes the touch operation into an original input event. The application selector in the application framework layer obtains the original input event from the kernel layer, and identifies a control corresponding to the input event. Then the application selector initiates an invocation request to the activity manager service based on a current control (for example, the "WeChat" application control). The invocation request may include content (for example, the page of the "browser" application) shared this time and a name of an invoked application (for example, the "WeChat" application).

The activity manager service receives the invocation request sent by the application selector, and sends the invocation request to the "collaboration assistant" application at the application layer, to simulate an application requested this time.

After receiving the invocation request sent by the activity manager service, the "collaboration assistant" application simulates the application (for example, the "WeChat" application) in the invocation request, and sends a name of the invoked application and the shared content to the first device by using the connection service at the connection layer.

After receiving the name of the invoked application and the shared content by using the connection service at the connection layer, the first device sends the name of the invoked application and the shared content to the application transfer service.

The application transfer service may enable the application based on the received name of the invoked application, and share the shared content in the application. In this way, data sharing between the electronic device 100 and the first device can be completed.

It should be noted that for a hardware structure and a software structure framework of the second device (for example, the second device 12 shown in FIG. 1) provided in embodiments of this application, refer to the structures shown in FIG. 2 and FIG. 3. Certainly, hardware structure and software structure frameworks of the first device and the second device (the electronic device 100) may not be completely the same, and are specifically determined based on an actual case. Details are not described herein.

Based on the system framework shown in FIG. 1, the hardware framework of the device shown in FIG. 2, and the software framework of the device shown in FIG. 3, embodiments of this application provide an application sharing method and an electronic device. A "collaboration assistant" application is installed on a device in embodiments of this application. In embodiments of this application, application information of a first device needs to be transmitted to a second device when the "collaboration assistant" in the device is enabled.

The "collaboration assistant" may be a service or a function provided by the device, and may be configured to implement functions, for example, implement establishment of a communication connection between the first device and the second device, implement data transmission between the first device and the second device, and implement instruction transmission between the second device and the first device. For example, the "collaboration assistant" may be an Android package (Android Package, APK), and may be installed on the device in a form of a control or an APP.

During specific implementation, the three functions of establishing a communication connection between the first device and the second device, performing data transmission between the first device and the second device, and performing instruction transmission between the second device and the first device may not be integrated into one APK file, and these functions may be implemented by using one or more APK files.

It may be understood that the "collaboration assistant" is merely a word used in the embodiments, a meaning represented by the word has been described in the embodiments, and a name of the word does not constitute any limitation on the embodiments.

The following describes some user interfaces (user interface, UI) provided by the first device and the second device in embodiments of this application by using examples. The term "user interface" in the specification, claims, and accompanying drawings of this application is a medium interface for interaction and information exchange between an application or an operating system and the user, and implements conversion between an internal form of information and a form acceptable to the user. A common representation form of the user interface is a graphical user interface (graphical user interface, GUI), and the graphical user interface is a graphically displayed user interface related to a computer operation. The GUI may be an interface element like an icon, a window, or a control displayed on a display of the electronic device, and the control may include a visual interface element like an icon, a button, a menu, a tab, a text box, a dialog box, a status bar, a navigation bar, or a widget.

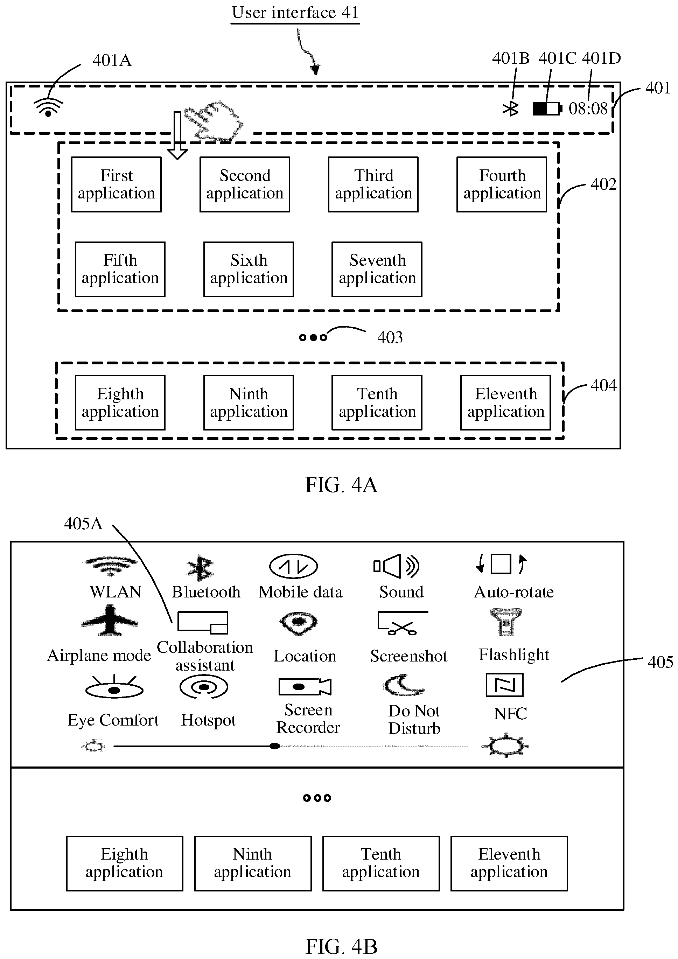

FIG. 4A shows an example user interface 41 that is on the second device and that is used for displaying an application installed on the second device.

The user interface 41 may include a status bar 401, an application icon 402, a page indicator 403, a tray 404 with icons of frequently used applications, and other indicators (not shown in FIG. 4A).

The status bar 401 may include one or more signal strength indicators 401A of a wireless fidelity (wireless fidelity, Wi-Fi) signal, a Bluetooth indicator 401B, a battery status indicator 401C, and a time indicator 401D.

The application icon 402 includes icons of a first application, a second application, a third application, a fourth application, a fifth application, a sixth application, a seventh application, and the like. These applications may be Email, Phone Manager, Gallery, Huawei Vmall, Videos, Mobile data/WLAN, Clock, QQ, WeChat, Taobao, Amap, and the like.

The page indicator 403 may be used to indicate a page on which the user is currently browsing application icons. The user may slide a region of the application icon 402 left or right to browse application icons on another page. These pages may also be referred to as a desktop of the second device.

The tray 404 with icons of frequently used applications may display icons of an eighth application, a ninth application, a tenth application, an eleventh application, and the like. These applications may be frequency used applications, for example, Settings, Music, Reader, and Camera.

In some embodiments, the user interface 41 may further include a navigation bar. The navigation bar may include system navigation keys such as a back key, a home screen key, and a multi-task key. When detecting that the user taps the back key, the second device may display a previous page of a current page. When detecting that the user taps the home screen key, the second device may display a home screen. When detecting that the user taps the multi-task key, the second device may display tasks recently opened by the user. The navigation keys may alternatively have other names. This is not limited in this application. The navigation keys in the navigation bar are not limited to virtual keys, and may alternatively be implemented as physical keys.

In some other embodiments, the second device may further include a physical home screen key. The home screen key may be configured to receive an instruction of the user, and return from a currently displayed UI to the home screen, so that the user can conveniently view the home screen at any time. The instruction may be specifically an operation instruction that the user presses the home screen key once, or may be an operation instruction that the user presses the home screen key two consecutive times in a short time, or may be an operation instruction that the user touches and holds the home screen key within a predetermined time. In some other embodiments of this application, the home screen key may be further integrated with a fingerprint sensor for performing fingerprint collection and recognition when the home screen key is pressed.

It may be understood that FIG. 4A shows only an example of the user interface on the second device, and should not constitute a limitation on embodiments of this application.

The following describes an example of a manner, provided in embodiments of this application, of enabling a "collaboration assistant" in the second device.

FIG. 4A and FIG. 4B show examples of operations of enabling the "collaboration assistant" in the second device.

As shown in FIG. 4A, when the second device detects a downward sliding gesture on the status bar 401, the second device may display a window 405 in the user interface 41 in response to the gesture. As shown in FIG. 4B, the window 405 may display an on/off control 405A of the "collaboration assistant", and may further display an on/off control of another function (for example, Wi-Fi, Bluetooth, or a flashlight). When a touch control operation performed on the on/off control 405A (for example, a tap or touch operation performed on the on/off control 405A) in the window 405 is detected, the second device may enable the "collaboration assistant" in response to the touch control operation.

In other words, the user may perform a downward sliding gesture at the status bar 401 to open the window 405, and may tap the on/off control 405A of the "collaboration assistant" in the window 405 to conveniently enable the "collaboration assistant". A representation form of the on/off control 405A of the "collaboration assistant" may be but is not limited to text information and/or an icon.

In a possible implementation, the "collaboration assistant" may alternatively be displayed on the desktop of the second device in a form of an application icon like Email or Gallery. After detecting an operation like tapping or touching performed on an icon of the "collaboration assistant", the second device enables the "collaboration assistant" in the second device.

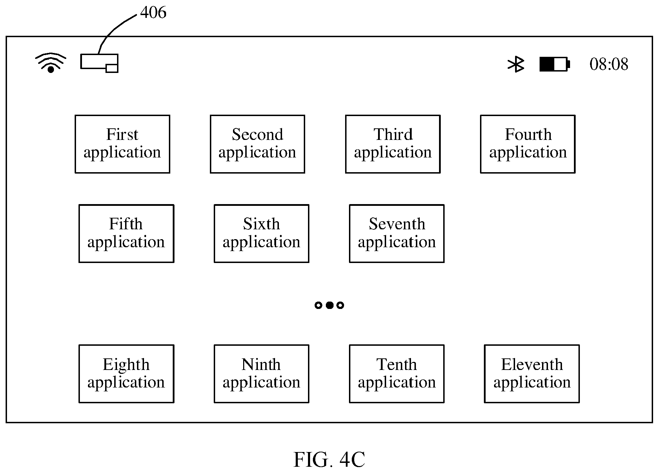

In some embodiments of this application, after enabling the "collaboration assistant", the second device may further display, in the status bar 401, prompt information indicating that the "collaboration assistant" has been enabled. For example, the icon of the "collaboration assistant" is displayed in the status bar 401, or a text "collaboration assistant" is directly displayed. For example, refer to FIG. 4C. In FIG. 4C, an icon 406 is the icon of the "collaboration assistant". It should be noted that the icon of the "collaboration assistant" is not limited to the icon shown in FIG. 4B and FIG. 4C. This is merely an example. A specific representation form of the icon of the "collaboration assistant" is not limited in this solution.

Embodiments of this application are not limited to the manner of enabling the "collaboration assistant" shown above. In some embodiments, the "collaboration assistant" may alternatively be enabled in another manner. In some other embodiments, the "collaboration assistant" may alternatively be enabled on the second device by default. For example, the "collaboration assistant" is automatically enabled after the second device is started.

For an operation of enabling a "collaboration assistant" on the first device, refer to the foregoing operation of enabling the "collaboration assistant" on the second device. Details are not described herein again. After the "collaboration assistants" of the first device and the second device are enabled, the first device may establish a communication connection to the second device, and then transmit data to the second device.

The following describes examples of some embodiments of graphical user interfaces implemented in a process in which the first device establishes a communication connection to the second device after the first device and the second device enable a "collaboration assistant" function.

First, the following uses an example in which the first device is a mobile phone and the second device is a tablet personal computer (tablet personal computer, Tablet PC) to describe a process in which the first device and the second device discover each other and establish a connection through near field communication (Near Field Communication, NFC). The following describes the process of establishing a connection between the two devices in two cases.

Case 1: The first device and the second device do not log in to a same system account.

In a specific embodiment, it is assumed that both the first device and the second device are devices of a same brand, but the two devices do not log in to a same system account after being started; or the first device and the second device are devices of different brands. In these cases, it indicates that the first device and the second device are devices with different accounts, namely, devices that do not log in to one system account at the same time. In this case, the first device and the second device may be connected in the following manner.

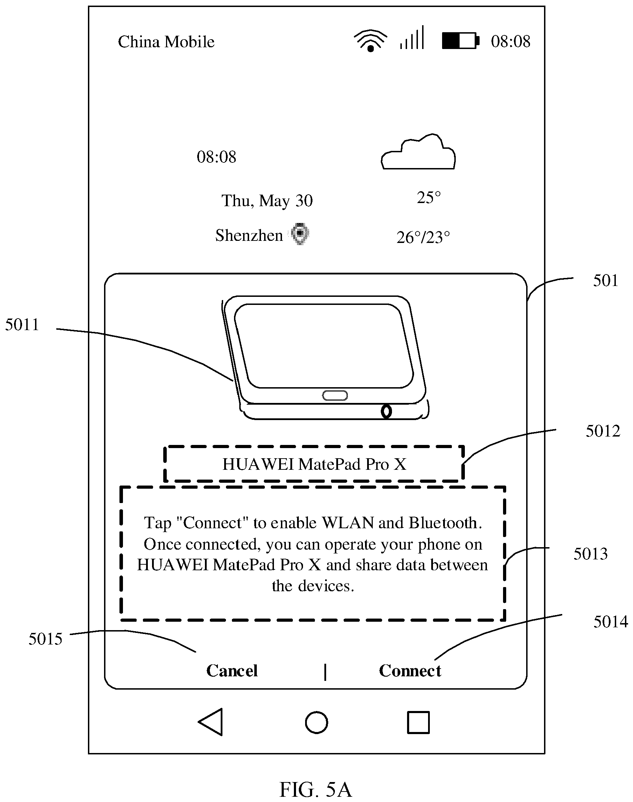

Specifically, when both the first device and the second device have NFC functions, and the NFC functions of both the first device and the second device are enabled, the first device may be enabled to approach or come into contact with the second device. For example, a preset part of the first device, for example, the back of the first device, may be enabled to approach or come into contact with a preset location of the second device, for example, a location with a sharing or connection label. Therefore, the first device and the second device can discover each other, and a user interface, for example, an interface shown in FIG. 5A, of the discovered second device may be displayed on a display of the first device.

The user interface shown in FIG. 5A includes a window 501, and the window 501 includes an icon 5011 of the discovered second device, a name 5012 of the second device, prompt information 5013, a "connect" control 5014, and a "cancel" control 5015.

The icon 5011 of the second device may be, for example, an icon of a tablet personal computer. The name 5012 of the second device may be, for example, HUAWEI MatePad Pro X. The prompt information 5013 may be used to explain, to the user, a function of the "connect" control 5014 and a function after a connection. For example, the prompt information 5013 may be "Tap "Connect" to enable WLAN and Bluetooth. Once connected, you can operate your phone on HUAWEI MatePad Pro X and share data between the devices.". The "connect" control 5014 may be used to send a connection confirmation request to the second device. The "cancel" control 5015 may be used to cancel a connection operation between the second device and the second device.

Optionally, the WLAN and Bluetooth are enabled after the "connect" control 5014 is tapped in FIG. 5A. In this case, the process of establishing a connection between the first device and the second device may be completed by using Bluetooth. After the connection is successfully established, data exchange and sharing between the first device and the second device may be implemented by using the WLAN. Implementing data exchange between the first device and the second device by using the WLAN after the connection is established by using Bluetooth can increase a data exchange speed and improve mutual response efficiency.

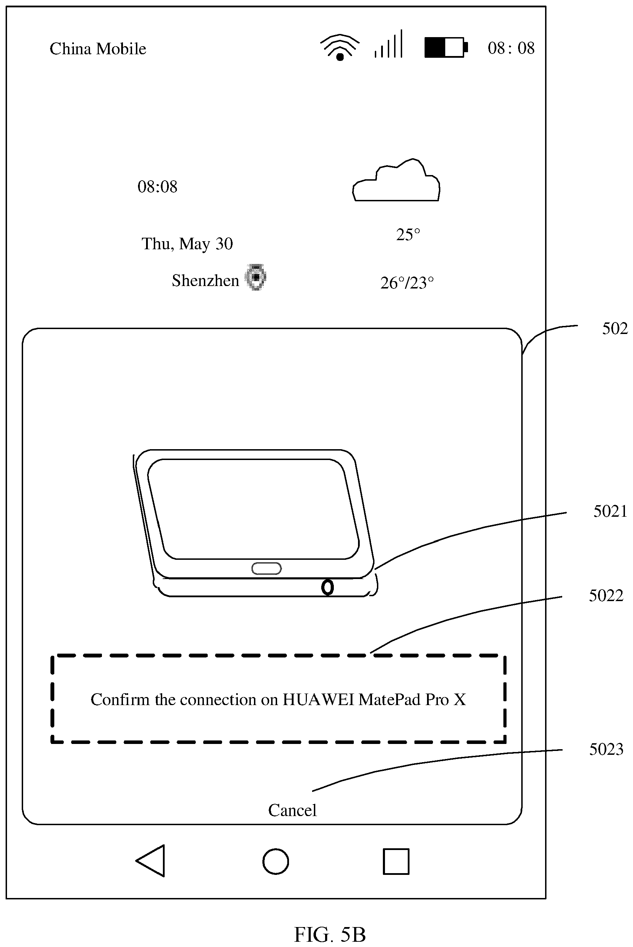

In the user interface shown in FIG. 5A, the first device displays a user interface shown in FIG. 5B in response to the touch control operation performed on the "connect" control 5014. In FIG. 5B, a window 502 for waiting for confirmation from the second device after the first device sends a connection confirmation request to the second device is included. Similarly, the window 502 may include an icon 5021 of the second device, and further include prompt information 5022 and a "cancel" control 5023.

The icon 5021 of the second device may be, for example, an icon of a tablet personal computer. The prompt information 5022 is used to indicate that the first device is waiting for confirmation from the second device. For example, the prompt information 5022 may be "Confirm the connection on HUAWEI MatePad Pro X ... ". The "cancel" control 5023 may be used to cancel a connection operation between the first device and the second device.

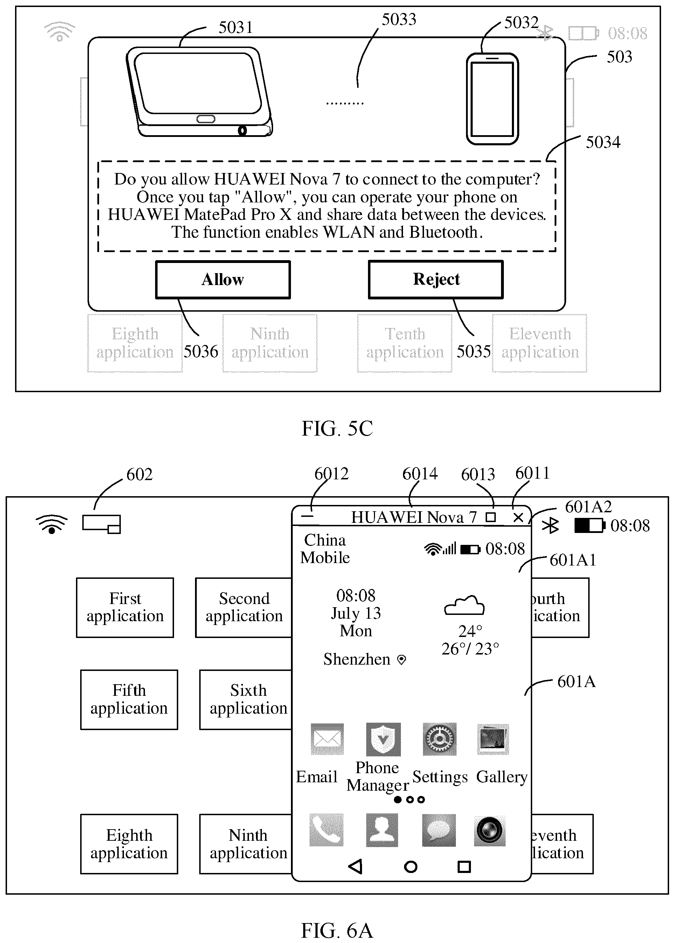

In the user interface shown in FIG. 5A, after responding to the touch control operation performed on the "connect" control 5014, the first device sends a connection request to the second device. After receiving the connection request, the second device displays a user interface shown in FIG. 5C.

The user interface shown in FIG. 5C includes a confirmation window 503 used for the second device to confirm whether to connect to the first device. The window 503 includes an icon 5031 of the second device, an icon 5032 of the first device, an associator 5033 between the second device and the first device, prompt information 5034, a "reject" control 5035, and an "allow" control 5036.

The icon 5031 of the second device may be, for example, an icon of a tablet. The icon 5032 of the first device may be, for example, an icon of a mobile phone. The prompt information 5034 may be used to indicate whether to connect, and explain, to the user, a function of the "allow" control 5036 and a function after a connection. For example, the prompt information 5034 may be "Do you allow HUAWEI Nova 7 to connect to the computer? Once you tap "Allow", you can operate your phone on HUAWEI MatePad Pro X and share data between the devices. The function enables WLAN and Bluetooth.". In the example, HUAWEI Nova 7 is a name of the first device, and the "reject" control 5035 may be used to reject a connection to the second device. The "allow" control 5036 may be used to establish a connection to the second device. HUAWEI MatePad Pro X is a name of the second device.

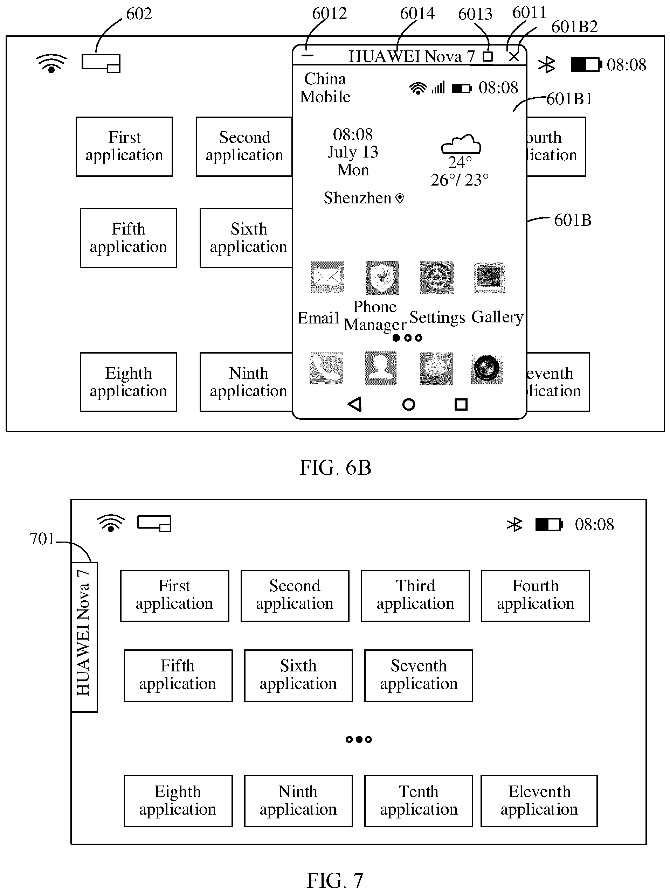

In the user interface shown in FIG. 5C, the second device determines, in response to a tap or touch control operation performed on the "allow" control 5036, to establish a connection to the first device. After the connection is established, a user interface diagram of the second device may be, for example, an interface diagram shown in FIG. 6A. The interface diagram indicates that the connection has been successfully established between the first device and the second device, in other words, information of the first device is transmitted to the second device and displayed on a display. The interface diagram shown in FIG. 6B is described in detail below, and details are not described herein.

The first device and the second device may be connected to a same wireless network. If the first device and/or the second device are or is connected to the wireless network, in the interface shown in FIG. 5A and/or the interface shown in FIG. 5C, the first device and/or the second device may not need to connect to the wireless network again.

An implementation of transmitting the information of the first device to the second device and displaying the information on the display may be detailed as follows:

After the connection is successfully established between the first device and the second device, an "application transfer service" (for example, the application transfer service of the application framework layer in FIG. 3) of the first device notifies the "collaboration assistant" (for example, the collaboration assistant at the application layer in FIG. 3) of the first device of the event that the connection is successfully established. In response to the event notification, the "collaboration assistant" obtains first interface display information on the first device by using a resource manager (for example, the resource manager at the application framework layer in FIG. 3) of the first device or the "application transfer service" of the first device.

The first interface display information is information about a first user interface that is of a first application and that is being displayed on the display of the first device, and the information may include data that is of the first device and that is used to display the first user interface. Specifically, the first interface display information may include stack information of the first user interface being displayed on the display, data of content displayed in the interface, and the like. The stack information may include a package name, a class name, and the like of an activity (Activity) service of the displayed application. The resource manager or the "application transfer service" of the first device may obtain, by using a "display framework" (for example, the display framework at the application framework layer in FIG. 3), the data of the content displayed in the interface.

After obtaining the first interface display information, the "collaboration assistant" of the first device may send the first interface display information to the second device by using the WLAN, namely, the foregoing connected wireless network. The second device receives the first interface display information by using the "collaboration assistant" of the second device, and sends the first interface display information to a "display framework" of the second device by using an "application transfer service" of the second device. The "display framework" schedules a window manager (for example, the window manager of the application framework layer in FIG. 3) based on the information, to display a window on the display. Content displayed in the window includes content displayed in the first user interface.

For the window, for example, refer to a window 601A in FIG. 6A. A size of the window 601A matches a size of the display of the first device. In this embodiment of this application, the window 601A shown in FIG. 6A may be referred to as a first window, but content displayed in the first window is not limited to content shown in the window 601A.

The first application may be any one of applications installed on the first device, and the first application may be a necessary application, for example, a system application like a desktop application, Files, or Settings, installed on the first device before being delivered from a factory. Alternatively, the first application may be an optional application, for example, a third-party application like WeChat, Taobao, Amap, or Meituan, installed on the first device. The optional application is not limited to the third-party application, and may be an application, for example, an "AppGallery" application of Huawei, produced by a brand of the first device. Some applications may sometimes be necessary system applications, or may sometimes be optional applications. For example, the "AppGallery" application of Huawei may be a necessary system application of the first device in some possible embodiments.

In this embodiment of this application, the first application is mainly described by using the third-party application like WeChat as an example. However, this does not constitute a limitation on this technical solution.

For example, for a window mapped from the first device to the second device, further refer to FIG. 6B. A window 601B shown in FIG. 6B is a user interface of the "AppGallery" application, in other words, a user interface displayed in the first device is also a user interface of "AppGallery". It should be noted that the user interface displayed in the window 601B in FIG. 6B may alternatively be a user interface of another application, for example, may be a user interface of an application like WeChat, QQ, or Huawei Vmall. A specific application is not limited in this solution.

Similarly, in this embodiment of this application, the window 601B shown in FIG. 6B may be referred to as a second window, but content displayed in the second window is not limited to content shown in the window 601B.

The window 601 shown in FIG. 6A is a schematic diagram of a desktop of the first device. The desktop of the first device is also an application, namely, the desktop application. Therefore, in other words, the window 601 shown in FIG. 6A may include a user interface of the desktop application of the first device.

It should be noted that in response to the event notification, the "collaboration assistant" of the first device may alternatively obtain the first interface display information by using another module other than the resource manager and the "collaboration framework" at the application framework layer. This is not limited in this embodiment of this application.

Case 2: The first device and the second device log in to a same system account.

In a specific embodiment, it is assumed that the first device and the second device are devices of a same brand, and the two devices log in to a same system account after being started, in other words, the two devices are devices with a same account. In this case, the first device and the second device may be connected in the following manner.

Specifically, when NFC functions of both the first device and the second device are enabled, the second device may be enabled to approach or come into contact with the second device. For example, a preset part of the second device, for example, the back of the second device, may be enabled to approach or come into contact with a preset location of the second device, for example, a location with a sharing or connection label. Therefore, the first device and the second device can discover each other, and a user interface of the discovered second device may be displayed on a display of the second device. For example, still refer to the interface shown in FIG. 5A.

In the user interface shown in FIG. 5A, the second device sends a connection request to the second device in response to a touch control operation performed on a "connect" control 5014. Because the first device and the second device are devices with a same account, a trust relationship is automatically established. The second device automatically confirms a connection after receiving the connection request sent by the second device. After the connection is confirmed, the connection between the two devices is completed. For example, in this case, the second device displays a user interface shown in FIG. 6A or FIG. 6B.

It should be noted that the communication connection may alternatively be established between the first device and the second device in another manner to implement data sharing. For example, the communication connection between the first device and the second device may be established by using Bluetooth, a data line, or another method of near field communication NFC. This is not limited in this embodiment of this application.

The following describes some embodiments of graphical user interfaces implemented on the second device after the first device establishes the connection to the second device. An example in which the second device is a tablet personal computer is used for description.

FIG. 6A and FIG. 6B are examples of diagrams in which after the first device establishes the connection to the second device, the first device maps a user interface displayed on the display of the first device to a display of the second device. For an example user interface displayed on the second device by default, refer to a window 601A in FIG. 6A and a window 601B shown in FIG. 6B. The window 601A and the window 601B may be referred to as collaboration windows.

It can be seen from FIG. 6A and FIG. 6B that sizes of the windows 601A and 601B do not match a size of the display of the second device. The mismatch may mean that aspect ratios of the window 601A and the window 601B may be different from an aspect ratio of the display of the second device or that the window 601A and the window 601B occupy only a part of an area of the display of the second device.

In FIG. 6A, the window 601A includes a title bar 601A2 in addition to a user interface 601A1 mapped from the first device (the user interface 601A1 mapped from the first device may be referred to as a mapping window 601A1). The title bar 601A2 may include a hide control 6011, a minimize control 6012, a maximize control 6013, and a name 6014 of the first device.

The hide control 6011 may be used to hide the window 601A. The second device hides the window 601A in response to a tap or touch operation performed on the hide control 6011. However, the second device may restore a display interface of the window 601A on the display in response to a tap or touch operation performed on a "collaboration assistant" icon 602 shown in FIG. 6A.

In a possible implementation, the hide control 6011 may be used to disconnect the first device from the second device. The second device may actively disconnect from the first device in response to a tap or touch operation performed on the hide control 6011. If the second device and the first device need to re-establish a connection, refer to the foregoing corresponding connection establishment descriptions. Details are not described herein again.

The minimize control 6012 may be used to minimize the window 601A. In response to a tap or touch operation performed on the minimize control 6012, the second device minimizes the window 601A, for example, minimizes the window 601A to an edge of the display of the second device. For example, refer to FIG. 7. In FIG. 7, a small window 701 is a minimized window 601A. For example, the small window 701 may include a name, for example, HUAWEI Nova 7, of the first device. It should be noted that a location of the small window 701 on the display of the second device is not limited to a location shown in FIG. 7, and may be any location on the edge of the display. The second device may restore the window 601A in response to a tap or touch operation performed on the small window 701.

Alternatively, the minimize control 6012 may be used to switch the window 601A to run in the background. When the window 601A needs to be displayed on the display, the window 601A is invoked from the background.

The maximize control 6013 may be used to maximize the window 601A. In response to a tap or touch operation performed on the maximize control 6013, the second device maximizes the window 601A, for example, spreads the window 601A to a full screen. Use and functions of the maximize control are described in detail below. Details are not described herein.

The name 6014 of the first device may be, for example, HUAWEI Nova 7.

For composition and functions of the window 601B in FIG. 6B, correspondingly refer to the descriptions of the window 601A in FIG. 6A. Details are not described herein again.

After the first device establishes the communication connection to the second device, the first device may send, to the second device in real time by using the "collaboration assistant", data of a user interface displayed on the display of the first device and information used to display the user interface, and the second device may update the collaboration window in real time based on the obtained information, so that content displayed in the collaboration window always includes content being displayed on the display of the first device.

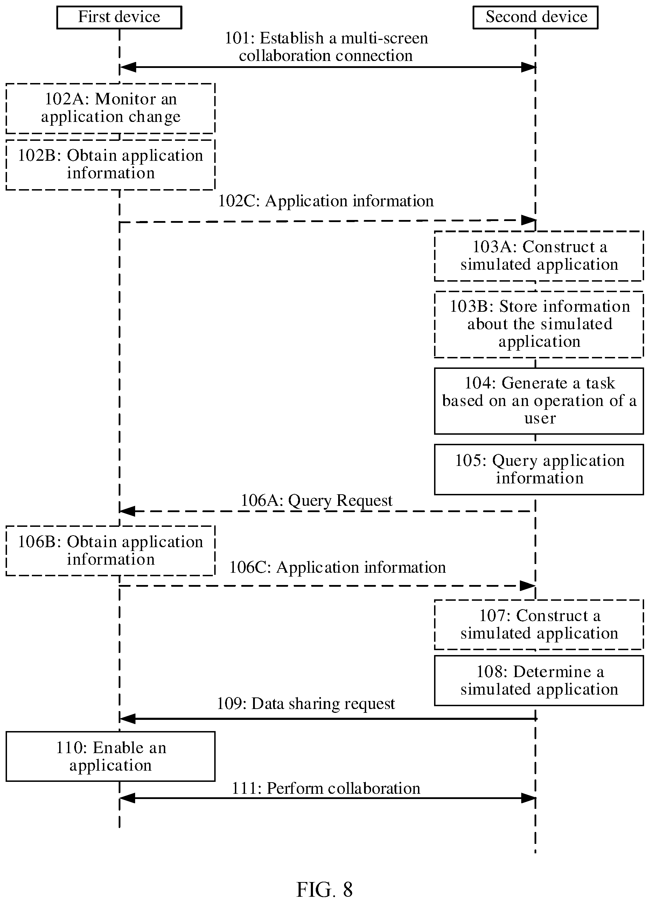

The application sharing method in this application is described with reference to FIG. 8 to FIG. 15. FIG. 8 is a flowchart of an embodiment of an application sharing method according to this application. As shown in FIG. 8, the application sharing method may include the following steps.

Step 101: A first device establishes a multi-screen collaboration connection to a second device.

Specifically, the first device and the second device may be electronic devices with displays, for example, a mobile phone, a tablet, and a computer. Preferably, the first device may be an electronic device with a small display, for example, a mobile phone. The second device may be an electronic device with a large display, for example, a tablet or a computer. This is not limited in this embodiment of this application.

The first device may establish a multi-screen collaboration connection to the second device. For a specific process of establishing the multi-screen collaboration connection, refer to FIG. 4A to FIG. 5C. Details are not described herein again. After the first device establishes the multi-screen collaboration connection to the second device, an image of the first device may be displayed on an image of the second device. For example, a multi-screen collaboration image shown in FIG. 6A may be obtained.

It may be understood that in a multi-screen collaboration connection state, a user may further perform an operation in a multi-screen collaboration window of the image of the second device to remotely control an application in the first device.

After the first device establishes the multi-screen collaboration connection to the second device, the first device may send application information to the second device. Optionally, the first device may actively or passively send the application information to the second device. The active sending manner includes step 102A to step 102C, and the passive sending manner includes step 106A to step 106C.

Next, an example in which the first device actively sends the application information is used to provide descriptions by using step 102A to step 102C.

Step 102A: The first device monitors an application change.

Specifically, after the first device establishes the multi-screen collaboration connection to the second device, the first device may monitor an information change of an application in the first device. For example, a package program may be executed on the first device to install an application. After an application is installed, an icon of the application may be generated on an interface of the first device, and package information corresponding to the icon is stored in the first device.

When package information in the first device changes, the first device may monitor package information in a package management service by using an application transfer service, to obtain the change of the package information to learn of an application change. For example, the first device may monitor the package information in the package management service by using the application transfer service at an application framework layer, and therefore may determine an application change. In addition, the first device may alternatively monitor a notification message to determine an application change. The notification message is used to notify an application change. For example, the package management service at the application framework layer of the first device may send a notification message to the application transfer service when an application is installed, uninstalled, or upgraded, to notify an application change.

It may be understood that the application change may include adding an application or deleting an application.

As described above, after the first device establishes the multi-screen collaboration connection to the second device, when the package information in the first device changes, an operation of sending the application information by the first device is triggered.

Optionally, after establishing the multi-screen collaboration connection to the second device, the first device may actively send the existing application information in the first device to the second device. In other words, the application information may be sent without depending on the condition that the package information changes. This is not specially limited in this embodiment of this application.

Step 102B: If the first device detects an application change, obtain application information.

Specifically, after detecting that information about an application changes, the first device may obtain the application information by performing a query. For example, the first device may query the package information stored in the package management service, and may obtain the corresponding application information by querying the package information. Preferably, the first device may further obtain package increment information by performing a query. In other words, the first device may obtain information about a newly installed application by performing a query. For example, if the package management service includes a package A and a package B, and a package C is newly added in this case, the first device may obtain package increment information (for example, information about the package C) by performing a query, in other words, may obtain application increment information (for example, information about an application C). The application C is an application corresponding to the package C. There is no need to obtain information about the package A and the package B, in other words, there is no need to obtain information about an application A and an application B. The application A is an application corresponding to the package A, and the application B is an application corresponding to the package B. Therefore, data transmission efficiency can be improved, and system resources can be reduced.

It may be understood that the first device may further obtain package decrement information, and therefore may send the package decrement information to the second device. The package decrement information may be information about an uninstalled package or a deleted package.

The application information may include an application icon and a task type. The task type is used to identify an executable task type corresponding to an application. For example, an application may correspond to a task type of file opening A, link sharing B, document editing C, or email sending D.

Step 102C: The first device sends the application information to the second device.

Specifically, the first device may send the application information to the second device by using a connection service at a connection layer. The connection service may be a Wi-Fi-based connection channel, may be a Bluetooth-based connection channel, or may be a short-range wireless connection channel in another form. This is not limited in this embodiment of this application.

In this embodiment, the first device actively sends the application information to the second device, so that the second device can learn of, in advance, an application that can be simulated, thereby improving simulation efficiency.

After receiving the application information sent by the first device, the second device may construct a simulated application based on the application information. Optionally, a manner of constructing the simulated application may include active construction and on-demand construction. The active construction manner includes step 103A and step 103B, and the on-demand construction manner includes step 107.

Next, an example in which the second device performs active construction on the application information is used to provide descriptions by using step 103A and step 103B.

Step 103A: The second device receives the application information sent by the first device, and constructs the simulated application based on the application information.

Specifically, the second device may receive, by using an application transfer service at an application framework layer, the application information sent by the first device, and may construct the simulated application based on the application information by using a collaboration assistant at an application layer. The simulated application may be used to simulate a portal of an application corresponding to the application information. In other words, the portal of the application may be simulated in the second device by using the collaboration assistant. For example, after the second device constructs the simulated application, the portal of the application corresponding to the simulated application may be generated in the second device, and the application in the first device may be invoked by using the portal, so that the first device can enable the application, and therefore the user can view content of the application by using the multi-screen collaboration window in the second device.

During specific implementation, after receiving the application information sent by the first device, the collaboration assistant at the application layer of the second device may determine whether the application information received this time includes a newly added or deleted application. For example, the application information received this time may be compared with a constructed simulated application. If for any newly added application in the application information, a simulated application is not constructed, a simulated application may be constructed in the collaboration assistant for the newly added application. If the collaboration assistant includes a simulated application corresponding to a name of a deleted or an uninstalled application in the application information, the simulated application may be deleted.

Step 103B: The second device stores information about the simulated application.

Specifically, after completing construction of the simulated application, the collaboration assistant at the application layer of the second device may send the information about the simulated application to a package management service at the application framework layer, so that the information about the simulated application is stored in the package management service. The information about the simulated application may include an icon of the simulated application and a task type corresponding to the simulated application.

In this embodiment, active construction is performed on the application information sent by the first device, so that the corresponding simulated application can be quickly invoked, thereby improving simulation efficiency.

Step 104: In response to a detected first operation performed by the user for data sharing, the second device generates a data sharing task based on the first operation, where the data sharing task includes task data and a task type.

Specifically, the user may perform a data sharing operation in the second device to initiate a data sharing task. For example, when performing web page browsing on a display 194 in the second device, the user may share a currently browsed web page. In response to an operation of the user, an application manager at the application framework layer of the second device may create a data sharing task (for example, a web page sharing task). The data sharing task may include task data and a task type. For example, the task type may include a sharing type and a playback type. For example, the sharing type may include a web page sharing task, and the playback type may include a video playback task. The task data may include a data address. For example, task data of web page sharing may be a link address of a web page, and task data of video playback may be a link address of a video file.

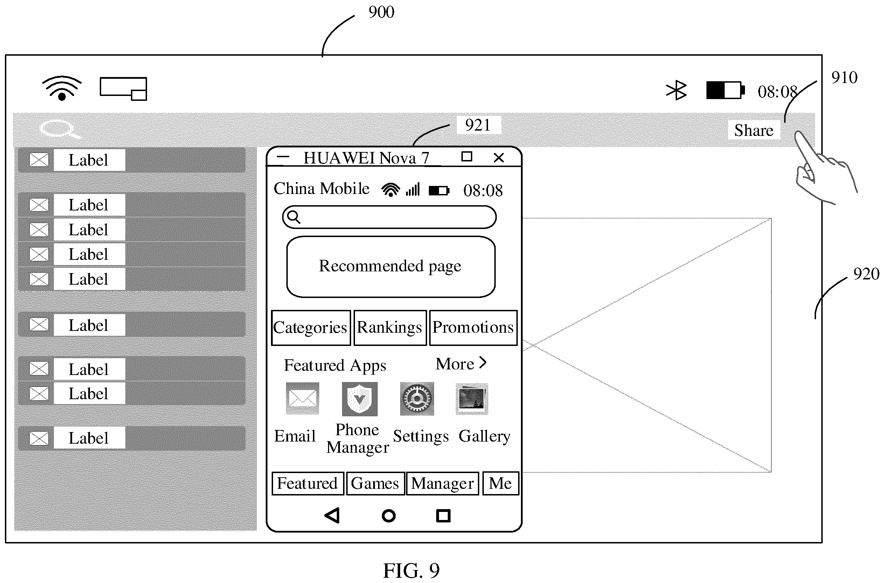

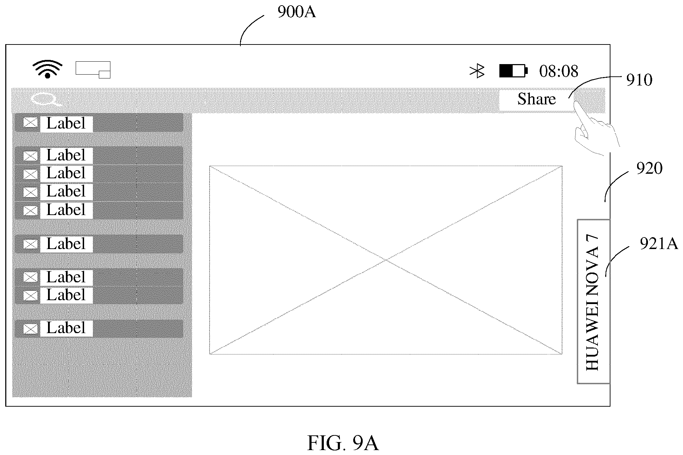

Web page sharing is used as an example for description. FIG. 9 is a schematic diagram of a user interface 900 of the second device. The user may perform a web page sharing operation in the user interface 900 of the second device. Refer to FIG. 9. The user interface 900 includes a control 910 and a browsing region 920. The control 910 corresponds to a function option of a current page. For example, the function option may include sharing, sending, or playing. The browsing region 920 is used to display page content currently browsed by the user. It may be understood that the displayed content in the browsing region 920 may be current task data. In addition, the user interface 900 may further include a multi-screen collaboration window 921. During specific implementation, the multi-screen collaboration window 921 may be superimposed on the browsing region 920. The multi-screen collaboration window 921 is used to display a user interface of the first device. In some embodiments, the multi-screen collaboration window 921 may be further minimized, so that a user interface 900A shown in FIG. 9A can be obtained. Refer to FIG. 9A. The user interface 900A includes the control 910, the browsing region 920, and a small window 921A. The small window 921A may be a window obtained after the multi-screen collaboration window 921 is minimized. In this case, the user may perform an operation on the control 910 in the user interface 900A. For example, the small window 921A may include a name, for example, HUAWEI Nova 7, of the first device. It should be noted that a location of the small window 921A on the display of the second device is not limited to a location shown in FIG. 9A, and may be any location on an edge of the display. The second device may restore the window 921 in response to a tap or touch operation performed on the small window 921A.

Step 105: The second device queries corresponding application information based on the task type.

Specifically, after creating the data sharing task, the application transfer service of the second device may perform a query in the package management service of the second device based on the task type, to obtain the application information corresponding to the task type, in other words, obtain an available application corresponding to the data sharing task. The application information may be information about one application, or may be information about a plurality of applications. The sharing type is used as an example. When the second device needs to share a web page link, the second device may query one or more pieces of application information corresponding to the sharing type, for example, may query a social application corresponding to the sharing type. The application information may include application information stored when a package program is executed in the second device and the information about the simulated application constructed by the second device after the second device receives the application information of the first device. In other words, the package management service of the second device may include an application installed on the second device and the application simulated based on the application information of the first device.

It should be noted that when the second device executes a package program to obtain an application, the second device may create corresponding application information for the application. The application information includes an application icon and a task type corresponding to the application. Therefore, the application information obtained by the second device by executing the package program also includes the task type.

After finding the corresponding application information, the package management service of the second device may send the application information to the application transfer service. After receiving the application information, the application transfer service may display the application icon in a user interface of the second device for selection by the user. Each icon may be a portal of an application.

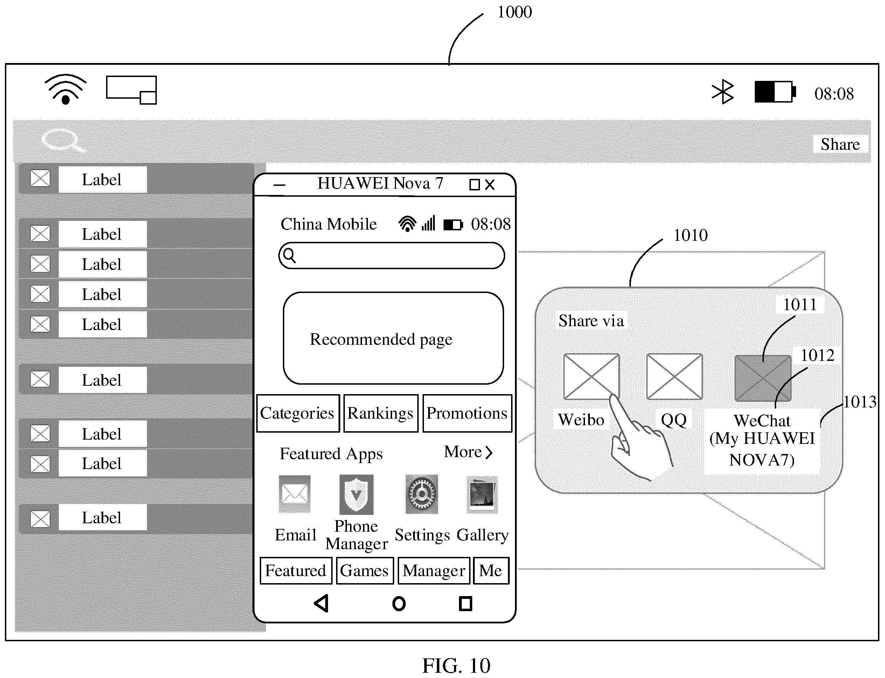

FIG. 9 is used as an example. After the user performs a sharing operation, the second device receives the sharing operation of the user to obtain a user interface 1000 shown in FIG. 10. Refer to FIG. 10. The user interface 1000 includes an application selection region 1010. The application selection region 1010 may include one or more application icons 1011. Each application icon 1011 may correspond to an application name 1012. Preferably, to identify a device to which each application belongs, where for example, the application is installed on the first device or the second device, an application source 1013 may be added after the application name 1012. The application source 1013 may be used to identify a source of the application. As shown in FIG. 10, a WeChat application comes from the first device (for example, HUAWEI NOVA7), and a Weibo application and a QQ application come from the second device.

Optionally, the source of the application may be identified in another manner. For example, an icon of an application from the first device is represented by using a first color, and an icon of an application from the second device is represented by using a second color. This is not limited in this application.

Optionally, an application source, for example, HUAWEI MatePad Pro X, may be added to each of the Weibo application and the QQ application, to identify that the Weibo application and the QQ application come from the second device (for example, HUAWEI MatePad Pro X).

Optionally, the application selection region 1010 may include only an icon of an application from another device. For example, in the application selection region 1010, only an icon 1011 of a WeChat application from the first device, a WeChat application name 1012, and an application source 1013 are displayed, but icons of a Weibo application and a QQ application installed on the current device are not displayed.

Optionally, an icon of a simulated application of the first device may be presented in the user interface of the second device by using a function option. For example, a data sharing option may be set in the second device. The data sharing option may be used to control whether the second device can perform cross-application sharing. For example, if the data sharing option is in an enabled state, after the second device receives a data sharing operation of the user, the icon of the simulated application of the first device may be presented in the user interface of the second device for selection by the user, so that data sharing can be implemented. If the data sharing option is in a disabled state, after the second device receives a data sharing operation of the user, the icon of the simulated application of the first device is not displayed in the user interface of the second device, so that excessive application icons can be prevented from being displayed in the interface.

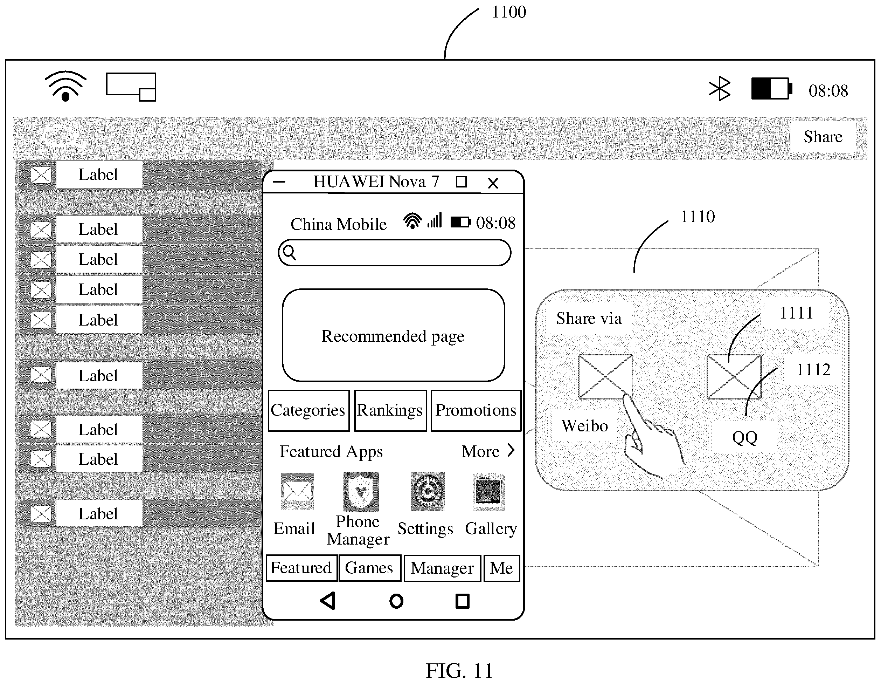

Similarly, FIG. 9 is used as an example. After the user performs a sharing operation, the second device receives the sharing operation of the user to obtain a user interface 1100 shown in FIG. 11. Refer to FIG. 11. The user interface 1100 includes an application selection region 1110. The application selection region 1110 may include one or more application icons 1111. Each application icon 1111 may correspond to an application name 1112. Because the user disables the data sharing option, the application selection region 1110 includes only an application installed on the second device, but does not include a simulated application.

Further, when application information is queried in the second device, an intelligent recommendation may be made based on a task type. For example, some applications may be intelligently selected from found applications, and presented in the user interface of the second device for selection by the user, so that the following case can be avoided: The user cannot quickly select a required application because excessive applications are presented. The intelligent recommendation may be determined based on a habit of the user. For example, when recommending an application, the second device may detect use frequency of each application corresponding to a current task type, and may intelligently recommend an application whose use frequency is greater than or equal to a preset frequency threshold. It may be understood that intelligent recommendation may alternatively be made in another manner. This is not limited in this embodiment of this application.

In some embodiments, the first device does not actively send application information to the second device. Therefore, the package management service of the second device cannot find corresponding information about a simulated application. In this case, the second device may send a query request to the first device to obtain the application information of the first device. In other words, after receiving the query request sent by the second device, the first device passively sends the application information. Next, a manner in which the first device passively sends the application information is used as an example to provide descriptions by using step 106A to step 106C.

Step 106A: The second device sends a query request to the first device.

Specifically, the query request may include a task type.

Step 106B: The first device receives the query request sent by the second device, and obtains application information.

Specifically, after receiving the query request sent by the second device, the first device may perform a query based on the task type in the query request, to obtain a corresponding application. Optionally, the first device may query all installed applications. This is not specially limited in this embodiment of this application.

Step 106C: The first device sends the application information to the second device.

Specifically, after finding the application, the first device may send the application information to the second device. The application information may be information about an application corresponding to the task type in the first device, or may be information about all the applications installed on the first device. This is not specially limited in this embodiment of this application.

In this embodiment, after receiving the query request from the second device, the first device sends the application information to the second device, to avoid frequently sending the application information to the second device and avoid wasting resources.

In some embodiments, after receiving the application information actively sent by the first device, the second device may not construct a simulated application, and may store the application information, for example, store the application information in the application transfer service. For example, the second device may construct some simulated applications when the user initiates a task (for example, a sharing task). In other words, the second device may construct a simulated application through on-demand construction. Next, an example of performing on-demand construction on a simulated application is used as an example to provide descriptions by using step 107.

Step 107: The second device constructs a simulated application based on the application information.

Specifically, the second device may receive, by using the application transfer service at the application framework layer, the application information sent by the first device, and may construct the simulated application based on the application information by using the collaboration assistant at the application layer. The application information may be information that is about an application and that is sent by the first device based on the request of the second device. For example, a type of the application may be a type corresponding to the task type. Alternatively, the second device may perform a query in the application transfer service to obtain the application information corresponding to the task type, and may construct the simulated application based on the found application information.

It may be understood that step 107 may be performed after step 105, in other words, the second device may perform construction based on a stored simulated application corresponding to the task type; or step 107 may be performed after step 106C, in other words, the second device may perform construction based on a simulated application that is passively sent by the first device and that corresponds to the task type. This is not specially limited in this embodiment of this application.

In this embodiment, after the user initiates the task, the second device performs on-demand construction on the simulated application based on the task type, to avoid constructing a redundant simulated application and further avoid causing burden on a system of the second device.

Step 108: The second device detects a second operation of selecting an application by the user, and determines a simulated application. The second device sends a data sharing request to the first device based on the simulated application.

Specifically, the user may select an application in an application selection interface displayed by the second device. For example, the user may perform an operation on the user interface shown in FIG. 10 to select a simulated application. For example, the user may tap the icon 1011 of the simulated application, or double-tap the icon of the simulated application, or may select the simulated application by perform sliding on the icon of the simulated application. This is not limited in this embodiment of this application.

Step 109: The second device initiates the data sharing request to the first device based on the determined simulated application.

Specifically, in response to the operation of selecting the simulated application by the user, the second device determines, by using an application selector at the application framework layer, the simulated application selected by the user, and sends an invocation request to an activity manager service based on the simulated application determined by the user. The invocation request may include an identifier of an invoked application and task data. The application identifier is used to identify the application, and the task data is used to identify content shared this time. After receiving the invocation request, the activity manager service forwards the invocation request to the collaboration assistant at the application layer to implement data sharing through a collaboration operation. After receiving the invocation request, the collaboration assistant may send the data sharing request to the first device by using a connection service at a connection layer. The data sharing request may be used to invoke the application in the first device to implement a data sharing task. The data sharing request may include the identifier of the invoked application and the task data.

Step 110: The first device receives the data sharing request sent by the second device, and enables the application.

Specifically, after receiving, by using the connection service at the connection layer, the data sharing request sent by the second device, the first device sends the data sharing request to the application transfer service at the application framework layer. After receiving the data sharing request, the application transfer service obtains the application identifier and the task data in the data sharing request, and enables, based on the application identifier, the application (for example, the "WeChat" application) corresponding to the application identifier. After enabling the application, the first device displays the task data by using the application. The display image may also be displayed by using the multi-screen collaboration window of the second device, so that data sharing can be completed. For example, if the user invokes a video playback application of the first device in the second device, after the first device enables the video playback application, the user may view a video in the multi-screen collaboration window of the second device. Alternatively, if the user invokes a social application of the first device in the second device, after the first device enables the social application, the user may perform content sharing in the multi-screen collaboration window of the second device.

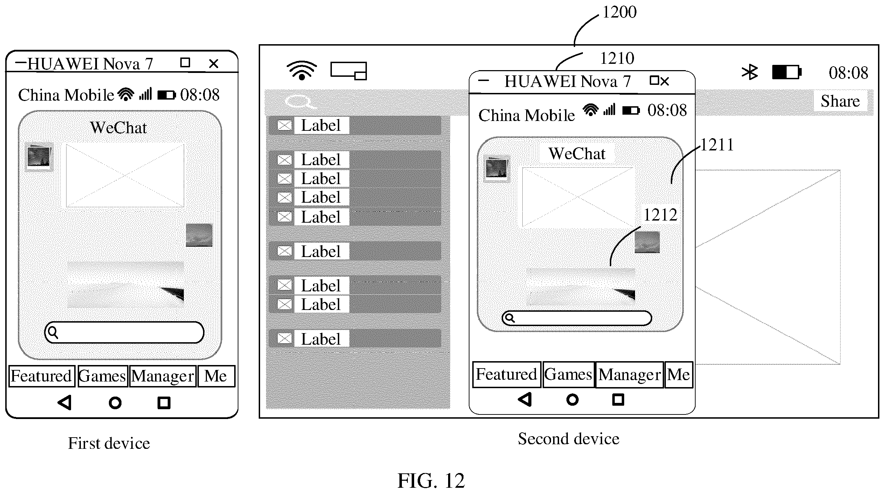

Descriptions are provided with reference to FIG. 12. FIG. 10 is used as an example. After the user selects the application (for example, the "WeChat" application) in the first device, a user interface 1200 in FIG. 12 may be obtained. Refer to FIG. 12. The user interface 1200 includes a multi-screen collaboration window 1210, and the multi-screen collaboration window 1210 is used to display a user interface (for example, a display interface after the "WeChat" application is enabled) of the first device. As shown in FIG. 12, the multi-screen collaboration window 1210 includes an enabled application 1211 and task data 1212 that has been shared this time.

Step 111: The second device simulates the application in the first device based on multi-screen collaboration, so that the task data is shared by using a simulated application.

Specifically, after enabling the application, the first device displays, in a user interface of the first device, an image obtained after the application is enabled. Based on multi-screen collaboration between the first device and the second device, the user interface of the first device may be displayed in the multi-screen collaboration window of the second device. Further, in the multi-screen collaboration window in the second device, the user may further perform an operation on a running simulated application. For example, the user may perform an operation like tapping or sliding on a control of the simulated application. The second device may send the event of performing tapping, sliding, or the like on the control to the first device by using a virtual device system. The event may include user operation information (for example, a touch location) and shared content (for example, a web page link address or a video playback address). Therefore, the first device can trigger a corresponding operation event (for example, the operation event may be performing an operation like tapping or sliding on a control), so that an operation of the user can be performed by using the application in the first device (for example, a web page link in the second device is shared by using the social application in the first device), and therefore the application in the first device can be controlled by performing an operation on the second device. In this embodiment, the second device simulates the application in the first device to implement cross-device application-based data sharing, so that data sharing efficiency can be improved, and user experience can be improved.

It may be understood that the foregoing embodiment shows the web page sharing scenario as an example, and embodiments of this application are also applicable to a file opening scenario. The scenario shown in the foregoing embodiment does not constitute a limitation on this application.

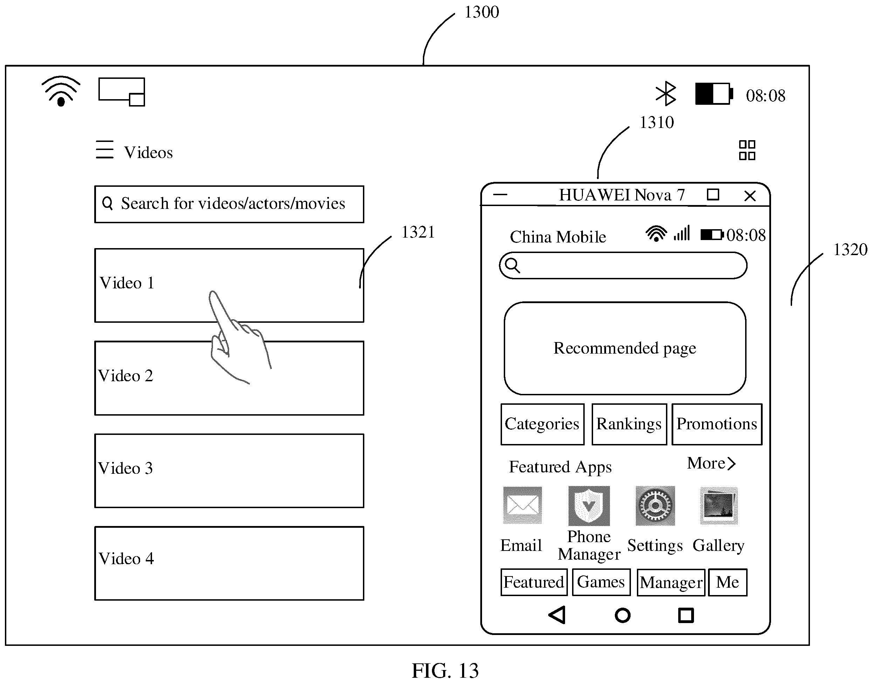

Next, the file opening scenario is used as an example for description with reference to FIG. 13 to FIG. 15.

FIG. 13 is a schematic diagram of a user interface 1300 of the second device. As shown in FIG. 13, the user interface 1300 includes a multi-screen collaboration window 1310 and a desktop 1320 of the second device, and the desktop 1320 includes one or more files 1321 (for example, video files). The user may tap a file 1321 to open the file 1321.

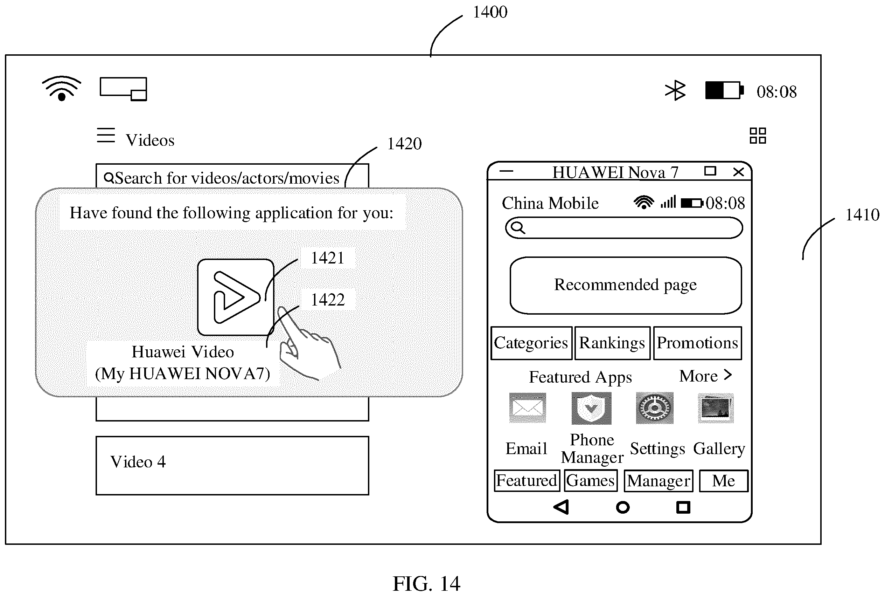

After the user taps any file 1321, a user interface 1400 shown in FIG. 14 may be obtained. The user interface 1400 includes a desktop 1410, the desktop 1410 includes an application selection region 1420, and the application selection region 1420 includes one or more available applications 1421. For example, no video application is installed on the second device, and therefore the video selected by the user cannot be opened. Therefore, an application 1421 (for example, "Huawei Video") installed on the first device may be displayed in the application selection region 1420, so that the user can select the application 1421 to complete viewing the video. Preferably, the application 1421 may further include description information 1422, and the description information 1422 may be used to identify a source of the application. For example, the description information may be "My HUAWEI NOVA7", used to identify that the application is installed on the first device named "HUAWEI NOVA7".

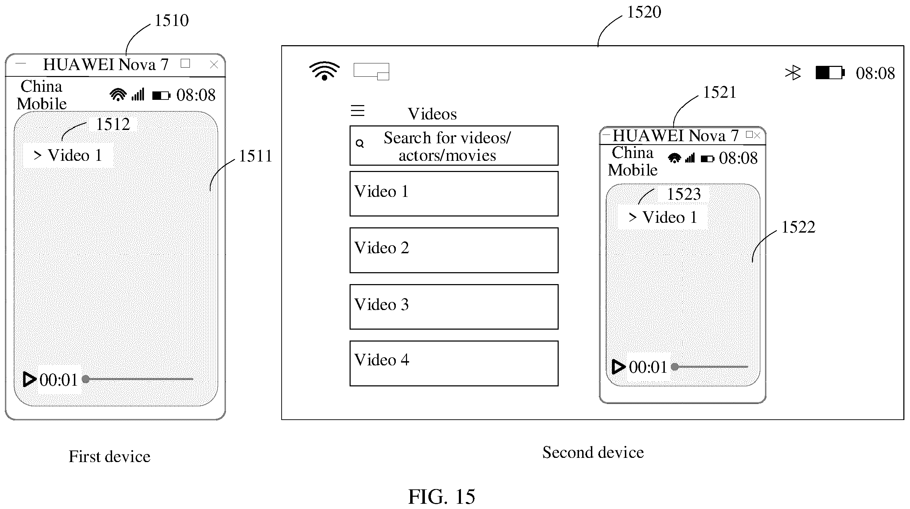

Then the user may tap an application 1421 (for example, the "Huawei Video" application) in the interface 1400, and therefore may send a request for invoking the application 1421 to the first device through multi-screen collaboration, for example, request the first device to enable the "Huawei Video" application. The request may further include an address of the video file that the user needs to play this time. After receiving the request of the second device for invoking the "Huawei Video" application, the first device may enable the "Huawei Video" application. Then the first device may find the corresponding video file based on the address of the video file in the request, and play, by using the "Huawei Video" application, the video file that the user requests to play. Therefore, a schematic diagram of multi-screen collaboration shown in FIG. 15 may be obtained.

As shown in FIG. 15, the first device displays an interface 1510, and the second device displays an interface 1520. The interface 1510 includes an opened application 1511 (for example, the "Huawei Video" application), and the application 1511 plays a video file 1512 (for example, a video 1) selected by the user. The interface 1520 includes a multi-screen collaboration window 1521. The multi-screen collaboration window 1521 may display same content as that in the interface 1510. For example, the multi-screen collaboration window 1521 may include an opened application 1522 (for example, the "Huawei Video" application). The application 1522 plays a video file 1523 (for example, the "video 1") selected by the user, so that cross-device application sharing can be implemented.

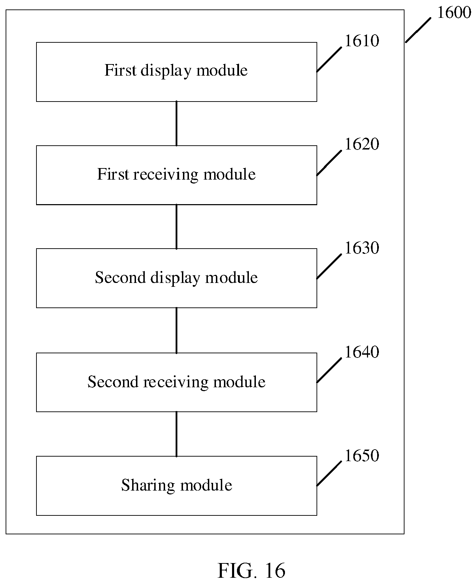

FIG. 16 is a schematic diagram of a structure of an embodiment of an application sharing apparatus according to this application. As shown in FIG. 16, the application sharing apparatus 1600 may include a first display module 1610, a first receiving module 1620, a second display module 1630, a second receiving module 1640, and a sharing module 1650.

The first display module 1610 is configured to display a first interface of a first application. The first interface includes a first option.

The first receiving module 1620 is configured to receive a first operation performed by a user on the first option.

The second display module 1630 is configured to display a first menu in response to the first operation. The first menu includes an icon of a second application, and the second application is an application installed on a second electronic device.

The second receiving module 1640 is configured to receive a second operation performed by the user on the icon of the second application.

The sharing module 1650 is configured to: determine the second application in response to the second operation, and send an application sharing request to the second electronic device. The application sharing request is used to indicate the second electronic device to enable the second application.

In a possible implementation, the apparatus 1600 further includes a connection module 1660.

The connection module 1660 is configured to establish a multi-screen collaboration connection to the second electronic device.

In a possible implementation, the apparatus 1600 further includes a third display module 1670.

The third display module 1670 is configured to display a second interface. The second interface includes a window of the second electronic device.

In a possible implementation, the second interface includes a second option, and the apparatus 1600 further includes a minimization module 1680.

The minimization module 1680 is configured to: receive a third operation performed by the user on the second option; and minimize the window of the second electronic device in response to the third operation.

In a possible implementation, an interface of the second application is displayed in the window of the second electronic device.

In a possible implementation, a third application is installed on the first electronic device, and the first menu further includes an icon of the third application.

In a possible implementation, the first menu further includes a first identifier, and the first identifier is used to indicate that the second application is an application installed on the second electronic device.

In a possible implementation, the second application in the first menu is determined by a task type corresponding to the first option.

In a possible implementation, the apparatus 1600 further includes a third receiving module 1690.

The third receiving module 1690 is configured to receive first application information sent by the second electronic device. The first application information includes package information of the second application.

In a possible implementation, the apparatus 1600 further includes a first simulation module 16A0.

The first simulation module 16A0 is configured to perform simulation based on the first application information sent by the second electronic device, to obtain the second application.

In a possible implementation, the apparatus further includes a second simulation module 16B0.

The second simulation module 16B0 is configured to: perform a query in the first application information based on the task type corresponding to the first option, to obtain second application information that matches the task type; and perform simulation based on the second application information to obtain the second application.

In a possible implementation, the apparatus further includes a query module 16C0.

The query module 16C0 is configured to send a query request to the second electronic device based on the task type corresponding to the first option. The query request is used to obtain application information of the second application installed on the second electronic device.

The application sharing apparatus provided in the embodiment shown in FIG. 16 may be configured to execute the technical solutions in the method embodiments shown in FIG. 1 to FIG. 15 in this application. For implementation principles and technical effects thereof, refer to the related descriptions in the method embodiments.

It should be understood that division of the modules of the application sharing apparatus shown in FIG. 16 is merely division of logical functions. In actual implementation, all or some modules may be integrated into one physical entity, or may be physically separated. In addition, all of the modules may be implemented in a form of software invoked by using a processing element or may be implemented in a form of hardware. Alternatively, some modules may be implemented in a form of software invoked by using a processing element, and some modules are implemented in a form of hardware. For example, a detection module may be a separately disposed processing element, or may be integrated into a chip of the electronic device for implementation. Implementation of other modules is similar. In addition, all or some of these modules may be integrated together, or may be independently implemented. In an implementation process, the steps of the foregoing methods or the foregoing modules may be implemented by using an integrated logical circuit of hardware in a processor element or by using instructions in a form of software.

For example, the foregoing modules may be configured as one or more integrated circuits for implementing the foregoing method, for example, one or more application-specific integrated circuits (Application-Specific Integrated Circuit, ASIC for short), one or more digital signal processors (Digital Signal Processor, DSP for short), or one or more field programmable gate arrays (Field Programmable Gate Array, FPGA for short). For another example, these modules may be integrated together, and implemented in a form of a system-on-a-chip (System-On-a-Chip, SOC for short).

This application further provides an electronic device. The device includes a storage medium and a central processing unit. The storage medium may be a non-volatile storage medium. The storage medium stores a computer executable program. The central processing unit is connected to the non-volatile storage medium, and executes the computer executable program to implement the methods provided in the embodiments shown in FIG. 1 to FIG. 15 in this application.

In the foregoing embodiments, the processor may include, for example, a CPU, a DSP, a microcontroller, or a digital signal processor, and may further include a GPU, an embedded neural-network processing unit (Neural-network Processing Unit, NPU for short), and an image signal processor (Image Signal Processor, ISP for short). The processor may further include a necessary hardware accelerator or logic processing hardware circuit, for example, an ASIC, or one or more integrated circuits configured to control program execution of the technical solutions in this application. In addition, the processor may have a function of operating one or more software programs, and the software programs may be stored in the storage medium.

An embodiment of this application further provides a computer-readable storage medium. The computer-readable storage medium stores a computer program, and when the computer program runs on a computer, the computer is enabled to perform the methods provided in the embodiments shown in FIG. 1 to FIG. 15 in this application.

An embodiment of this application further provides a computer program product. The computer program product includes a computer program, and when the computer program product runs on a computer, the computer is enabled to perform the methods provided in the embodiments shown in FIG. 1 to FIG. 15 in this application.

In embodiments of this application, "at least one" means one or more, and "a plurality of" means two or more. The term "and/or" describes an association relationship between associated objects and indicates that three relationships may exist. For example, A and/or B may represent the following three cases: Only A exists, both A and B exist, and only B exists, A and B may be singular or plural. The character "/" generally indicates an "or" relationship between the associated objects. "At least one of the following items" and a similar expression thereof means any combination of these terms, including any combination of one or more of the items. For example, at least one of a, b, and c may represent a, b, c, a and b, a and c, b and c, or a, b, and c, where a, b, and c may be singular or plural.

A person of ordinary skill in the art may be aware that the units and the algorithm steps described in the embodiments disclosed in this specification can be implemented by a combination of electronic hardware, computer software, and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the embodiments provided in this application, if any function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium capable of storing program code, for example, a USB flash drive, a removable hard disk, a read-only memory (Read-Only Memory, ROM for short), a random access memory (Random Access Memory, RAM for short), a magnetic disk, or an optical disc.

The foregoing descriptions are merely specific implementations of this application, and any variation or replacement readily figured out by a person skilled in the art within the technical scope disclosed in this application shall fall within the protection scope of this application. The protection scope of this application shall be subject to the protection scope of the claims.

## Claims

1. An application sharing method, applied to a communication system comprising a first electronic device and a second electronic device, wherein a first application is installed on the first electronic device, a second application is installed on the second electronic device, and the method comprises:
displaying, by the first electronic device, a first interface of the first application, wherein the first interface comprises a first option;
receiving, by the first electronic device, a first operation performed by a user on the first option;
displaying, by the first electronic device, a first menu in response to the first operation, wherein the first menu comprises an icon of the second application;
receiving, by the first electronic device, a second operation performed by the user on the icon of the second application;
sending, by the first electronic device, an application sharing request to the second electronic device in response to the second operation; and
enabling, by the second electronic device, the second application in response to the received application sharing request.

2. The method according to claim 1, wherein before the receiving, by the first electronic device, a first operation performed by a user on the first option, the method further comprises:
establishing, by the first electronic device, a multi-screen collaboration connection to the second electronic device.

3. The method according to claim 1 or 2, wherein the method further comprises:
displaying, by the first electronic device, a second interface, wherein the second interface comprises a window of the second electronic device.

4. The method according to claim 3, wherein the second interface comprises a second option, and after the displaying, by the first electronic device, a second interface, the method further comprises:
receiving, by the first electronic device, a third operation performed by the user on the second option; and
minimizing, by the first electronic device, the window of the second electronic device in response to the third operation.

5. The method according to claim 3, wherein an interface of the second application is displayed in the window of the second electronic device.

6. The method according to any one of claims 1 to 5, wherein a third application is installed on the first electronic device, and the first menu further comprises an icon of the third application.

7. The method according to any one of claims 1 to 6, wherein the first menu further comprises a first identifier, and the first identifier is used to indicate that the second application is an application installed on the second electronic device.

8. The method according to any one of claims 1 to 7, wherein the second application in the first menu is determined by a task type corresponding to the first option.

9. The method according to any one of claims 1 to 8, wherein before the receiving, by the first electronic device, a first operation performed by a user on the first option, the method further comprises:
receiving, by the first electronic device, first application information sent by the second electronic device, wherein the first application information comprises package information of the second application.

10. The method according to claim 9, wherein after the receiving, by the first electronic device, first application information sent by the second electronic device, the method further comprises:
performing, by the first electronic device, simulation based on the first application information sent by the second electronic device, to obtain the second application.

11. The method according to claim 9, wherein after the receiving, by the first electronic device, first application information sent by the second electronic device, the method further comprises:
performing, by the first electronic device, a query in the first application information based on the task type corresponding to the first option, to obtain second application information that matches the task type; and
performing, by the first electronic device, simulation based on the second application information to obtain the second application.

12. The method according to any one of claims 1 to 8, wherein after the responding, by the first electronic device, to the first operation, the method further comprises:
sending, by the first electronic device, a query request to the second electronic device based on the task type corresponding to the first option, wherein the query request is used to obtain application information of the second application installed on the second electronic device.

13. An application sharing method, applied to a first electronic device, wherein a first application is installed on the first electronic device, and the method comprises:
displaying a first interface of the first application, wherein the first interface comprises a first option;
receiving a first operation performed by a user on the first option;
displaying a first menu in response to the first operation, wherein the first menu comprises an icon of a second application, and the second application is an application installed on a second electronic device;
receiving a second operation performed by the user on the icon of the second application;
determining the second application in response to the second operation; and
sending an application sharing request to the second electronic device, wherein the application sharing request is used to indicate the second electronic device to enable the second application.

14. The method according to claim 13, wherein the method further comprises:
establishing a multi-screen collaboration connection to the second electronic device.

15. The method according to claim 13 or 14, wherein the method further comprises:
displaying a second interface, wherein the second interface comprises a window of the second electronic device.

16. The method according to claim 15, wherein the second interface comprises a second option, and after the displaying a second interface, the method further comprises:
receiving a third operation performed by the user on the second option; and
minimizing the window of the second electronic device in response to the third operation.

17. The method according to claim 15, wherein an interface of the second application is displayed in the window of the second electronic device.

18. The method according to any one of claims 13 to 17, wherein a third application is installed on the first electronic device, and the first menu further comprises an icon of the third application.

19. The method according to any one of claims 13 to 18, wherein the first menu further comprises a first identifier, and the first identifier is used to indicate that the second application is an application installed on the second electronic device.

20. The method according to any one of claims 13 to 19, wherein the second application in the first menu is determined by a task type corresponding to the first option.

21. The method according to any one of claims 13 to 20, wherein before the receiving a first operation performed by a user on the first option, the method further comprises:
receiving first application information sent by the second electronic device, wherein the first application information comprises package information of the second application.

22. The method according to claim 21, wherein after the receiving first application information sent by the second electronic device, the method further comprises:
performing simulation based on the first application information sent by the second electronic device, to obtain the second application.

23. The method according to claim 21, wherein after the receiving first application information sent by the second electronic device, the method further comprises:
performing a query in the first application information based on the task type corresponding to the first option, to obtain second application information that matches the task type; and
performing simulation based on the second application information to obtain the second application.

24. The method according to any one of claims 13 to 20, wherein after the responding to the first operation, the method further comprises:
sending a query request to the second electronic device based on the task type corresponding to the first option, wherein the query request is used to obtain application information of the second application installed on the second electronic device.

25. A first electronic device, comprising:
a display, a processor, a memory, and a computer program, wherein the computer program is stored in the memory, the computer program comprises instructions, and when the instructions are executed by the first electronic device, the first electronic device is enabled to perform the application sharing method according to any one of claims 13 to 24.

26. A computer-readable storage medium, wherein the computer-readable storage medium stores a computer program, and when the computer program runs on a computer, the computer is enabled to perform the application sharing method according to any one of claims 13 to 24.
